# EUROPEAN PATENT SPECIFICATION

(11) **EP 3 833 812 B1**
(45) Date of publication and mention of the grant of the patent: **27.03.2024**
(21) Application number: 19847263.1
(22) Date of filing: 08.08.2019
(51) Int. Cl.: D21B 1/02, D21B 1/12, D21B 1/38, D21C 1/02

(54) **METHODS AND DEVICES FOR PROCESSING LIGNOCELLULOSIC BIOMASS WITH RECOVERY PURIFIED LIGNIN AND PURIFIED WAX FRACTIONS**
VERFAHREN UND VORRICHTUNGEN ZUR BEHANDLUNG VON LIGNOCELLULOSE-BIOMASSE MIT RÜCKGEWINNUNG VON GEREINIGTEM LIGNIN UND GEREINIGTEN WACHSFRAKTIONEN
PROCÉDÉS ET DISPOSITIFS DE TRAITEMENT DE BIOMASSE LIGNOCELLULOSIQUE À RÉCUPÉRATION DE LIGNINE PURIFIÉE ET FRACTIONS DE CIRE PURIFIÉES

(30) Priority: 08.08.2018 US 201862715879 P; 12.11.2018 US 201862758700 P; 25.02.2019 US 201962809997 P; 12.04.2019 US 201962832898 P
(43) Date of publication of application: 16.06.2021
(73) Proprietor: Casad, Jr., Robert C., 5240 Odense (DK)
(72) Inventor: Casad, Jr., Robert C., 5240 Odense (DK)
(86) International application number: PCT/US2019/045638
(87) International publication number: WO 2020/033633

(56) References cited:
- WO-A1-2017/108055
- WO-A1-2017/109468
- WO-A1-2018/085487
- WO-A1-2018/085487
- WO-A2-2007/009463
- WO-A2-2015/009986
- US-A1- 2016 083 808
- US-A1- 2016 153 010
- US-A1- 2017 107 664
- US-A1- 2017 226 330

## Description

This application claims priority to US provisional patent applications 62/715879 filed August 8, 2018, and 62/758700 filed November 12, 2018, and 62/809997 filed February 25, 2019, and 62/832898 filed April 12, 2019, each of which are hereby incorporated by reference in entirety. This invention was made in part with support of the Danish State Innovations Fund under Jnr. 6123-01172B.

FIELD: The invention relates in general to methods and devices for processing lignocellulosic biomass and in particular to methods and devices involving hydrothermally pretreated biomass feedstocks and production of purified lignin and/or purified wax process streams.

Conversion of lignocellulosic biomass to fuels, chemicals and other useful products is widely regarded as critical for development of a sustainable political economic order.

Biogas conversion technologies are particularly promising. Upgraded biomethane can alternatively be stored in a gas grid or used as vehicle fuel while raw biogas can be used for dispatchable electrical power generation during peak demand. As shown in Table 1, in terms of energy recovery as vehicle fuel, biomass conversion to biomethane is far more efficient than what can be achieved with other microbial biofuels such as ethanol, butanol and biodiesel. Biogas technologies rely on simple fermentation schemes and are accordingly much cheaper in capital and operating costs. Yet biogas technologies have previously been applied primarily only to low or negative cost substrates while higher cost lignocellulosic feedstocks have been used primarily for less efficient, more expensive biofuel fermentation processes.

We have discovered that, very surprisingly, in digestate from homogeneous anaerobic digestion of wheat straw pellets steam pretreated so as to avoid agitation as described in WO2018/085487, residual lignin exists primarily as comparatively pure microparticles with diameters on the order < 3 µm. These microparticles can be readily separated from fibers and other suspended solids and thereby recovered directly from the digestate effluent stream. This provides means to obtain byproducts that are sufficiently valuable to enable use of high-cost lignocellulosic feedstocks in biogas production. Alternatively, these same byproducts can be obtained from other biological conversion systems including more elaborate biofuel fermentations.

These microparticles correspond to small globules of lignin which melted and subsequently re-condensed during hydrothermal pretreatment. The formation of these microdroplets is a general phenomenon in hydrothermal pretreatment of lignocellulosic biomass, see Li (2014a), which has been observed experimentally in at least wood chips, shrubberies, switchgrass, wheat and corn straw. See Selig (2007), Donohoe (2008), Xiao (2011), Hansen (2013), Pu (2013), Ji (2016). Our results indicate that the non-ash content of these microparticles from wheat straw comprises a mixture of lignin (ca 79 wt.%), a small amount of carbohydrate (ca 4 %) and non-carbohydrate impurity (ca 17 wt.%) which, also surprisingly, includes a substantial fraction of "wax," a general term that refers to complex mixtures of chemical substances from different families, including at least sterols, alkanes, fatty acids, fatty alcohols, ketones, aldehydes, wax esters, diglycerides, triglycerides, and steryl-esters. Our results demonstrate that, at least for unagitated hydrothermal pretreatment of straw pellets, which are compressed in a random mixture of anatomical components, cuticular and epicuticular wax melts during pretreatment then preferentially partitions with melted lignin to form lignin-rich microparticles.

Separated from lignin, this wax component is a valuable byproduct in its own right. Indeed, wax from wheat straw and other feedstocks is so valuable that comparatively elaborate schemes for isolating it have been presented, such as the processes described in WO2006/082437, WO2015/185685 and WO2018/086672. If all the wax and lignin content of the feedstock is recovered in the microparticles, their non-ash content would include about 12% wax, in the case of wheat straw. Provided here are methods and devices for recovering both purified lignin and purified wax fractions from biological conversion of hydrothermally pretreated lignocellulosic biomass.

Because these lignin-rich microparticles are extremely small and because they carry a substantial negative surface charge, they are difficult to recover using any commercially reasonable scheme for centrifugation or filtration at pH 5.0 (typical pH optimum for fermentive organisms and for commercial cellulase preparations such as CELLIC CTEC3 Tm) much less at pH 7-8 (typical for biogas digestion). Yet quite apart from being a disadvantage, the resilience of "microlignin" to solid/liquid separation provides the underlying technical basis for simple, inexpensive recovery of a high value lignin byproduct from biological conversion of lignocellulosic biomass. An initial centrifugal solid/liquid separation acts upon undigested fiber and comparatively large silica phytoliths but leaves lignin-rich microparticles suspended in supernatant along with dissolved solids. The comparatively pure microparticles can then be concentrated as a liquid dispersion having sufficiently high dry matter content to be usable in further processing with chemical or thermochemical treatments with or without catalysts or isolated by a variety of means, for example, by adjustment to lower pH which induces flocculation. Isolated or concentrated microparticles can be valorized in a variety of ways. For example, flocculated microparticles recovered in a filter cake can be directly dissolved at room temperature simply by adding NaOH and stirring. The resulting lignin solution in strong base can be used for catalytic depolymerisation or directly used as the fundamental reagent for chemical upgrading to high value lignin end products, most notably phenolic resins but also binders in general and dispersants. Or for another example, isolated lignin microparticles can be used to make liquid emulsion fuels such as described in WO2016/023563. To the extent that a biogas producer is directly purveyor of these end products, recovery of pure lignin microparticles might, in and of itself, render straw biogas digestion profitable in the absence of state subsidies.

Maximum organic loading rate (OLR) in biogas digestion of steam pretreated straw feedstocks was previously believed to be limited by the incidence of C5 and lignin degradation products formed during pretreatment which are well known to inhibit anaerobic digestion. See e.g. Ahmad (2018) and Paul (2018) for review. Many researchers have suggested that pretreatment severity should be kept to levels no greater than about log Ro 3.5 to minimize inhibition of anaerobic digestion. See e.g. Wang (2018) (rice straw); Bauer (2014) (hay); Ferreira (2013) (wheat straw). This limitation does not apply to biogas digestion of pelletized straw pretreated so as to avoid agitation as described in WO2018/085487, which greatly reduces degradation of lignin and C5 sugars relative to agitated pretreatments including steam explosion. Applying methods of the invention, high value lignin byproduct can be recovered from biogas digestion of pretreated straw, wood or energy grasses at commercially advantageous very high OLR, effectively transforming a biogas plant into a true biorefinery.

The resilience to centrifugal solid/liquid separation of "microlignin" from unagitated pretreatment of compressed straw also provides technical basis for novel, inexpensive embodiments of a Kalundborg-scale biorefinery. (The term "Kalundborg-scale biorefinery" refers to the now-closed INBICON Tm demonstration biorefinery for cellulosic ethanol in Kalundborg Denmark, which had nameplate capacity 4 tons wheat straw dry matter (DM) per hour.) Our results demonstrate that the same lignin microparticles obtained in biogas digestion can also be obtained from extreme enzymatic hydrolysis of hydrothermally pretreated straw pellets. As a consequence, it should be possible to use the same capital infrastructure as that applied in a typical Danish biogas plant, i.e. a 9000 m3 continuously stirred tank reactor (CSTR), for continuous simultaneous saccharification fermentation (SSF) of steam pretreated straw. That is to say, it should be possible to maintain steady-state in continuous CSTR-SSF by removing dry matter comprising primarily lignin-rich microparticles, fermentive organism, and fermentation product. Fibers, which can be readily separated from lignin microparticles, and fiber-associated enzymes can be returned to the tank such that fiber "residence time" is effectively unlimited. Continuous hydrolysis and fermentation in a single CSTR is well known in the art and is even used commercially in some ethanol fermentations. For review see Brethauer (2010).

The universal tendency for formation of lignin microdroplets during hydrothermal pretreatment indicates that the technology described here can be productively applied to lignocellulosic feedstocks, in general, including straws, energy grasses and wood chips.

One skilled in the art will readily conceive many fruitful process schemes which exploit the properties of lignin-rich microparticles recoverable from enzymatic and/or microbial hydrolysis of hydrothermally-pretreated straw feedstocks.

**Table 1. Maximum theoretical conversion of wheat straw biomass to selected microbial biofuels.**

| Microbial Biofuel | maximum theoretical conversion % | MJ/kg enthalpy of combustion | GJ theoretical yield per ton DM |
|---|---|---|---|
| Butanol | 22.4* | 36.1 | 8.09 |
| Ethanol | 27.9* | 29.7 | 8.29 |
| Ethyl- hexadecanoate | 19.1* | 39.4 | 7.53 |
| Farnescene | 13.7* | 47.0 | 6.44 |
| Methane | 23.4** | 55.1 | 12.89 |

| | | | |
|---|---|---|---|
| *assumes complete conversion of all 5 and 6 carbon sugars according to the theoretical yields on glucose reported by Rude and Schirmer (2009) Current Opinion in Microbiology 12:274. ** experimentally observed in biogas digestion of steam pretreated wheat straw. | | | |

### Brief description of the drawings.

Figure 1A shows a microscope image of diluted supernatant from 3000g/5 minute centrifugation of effluent from homogeneous biogas digestion of steam preteated wheat straw pellets with 40 day HRT and 13.8% DM at steady-state.
Fig 1B shows the micron bar corresponding to the microscope view in Figure 1A. Each of the divisions shown corresponds to 10 µm.
Figure 2 shows the appearance of a typical supernatant from 3000g/5 minute centrifugation of effluent from steady-state homogeneous biogas digestion of steam preteated wheat straw pellets.
Figure 3 shows the appearance after drying of a typical 3000g/5 minute supernatant shown in Figure 2.
Figure 4 shows a microscope view of a diluted aliquot from a 35.000 g/2 hour pellet from centrifugation of 3000g/5 minute supernatant of effluent from steady-state homogeneous biogas digestion of steam preteated wheat straw pellets.
Figure 5 shows a microscope view of a diluted aliquot from a 35.000 g/2 hour pellet from centrifugation of 3.000 g/5 minute supernatant from enzymatic hydrolysate described in example 2.
Figure 6 shows FTIR spectra of microlignin with included wax and dissolved solids purified as pellet from 20.000 g/2 hour centrifugation of 3000 g/5 minute supernatant from biogas digestate at varied pH and from enzymatic hydrolysate described in example 2.
Figure 7 shows normalised FTIR spectra of DM ethanol-extracted from a purified microlignin fraction.
Figure 8 shows a hot pressed fiberboard formed using microlignin dissolved in NaOH to completely replace phenol in a phenolic resin.

### Description of embodiments.

We have discovered that, surprisingly, residual undigested lignin content can be recovered from homogeneous biogas digestion of hydrothermally pretreated wheat straw pellets as comparatively pure lignin-rich microparticles suspended in the supernatant stream from continuous decanter centrifugation of digestate.

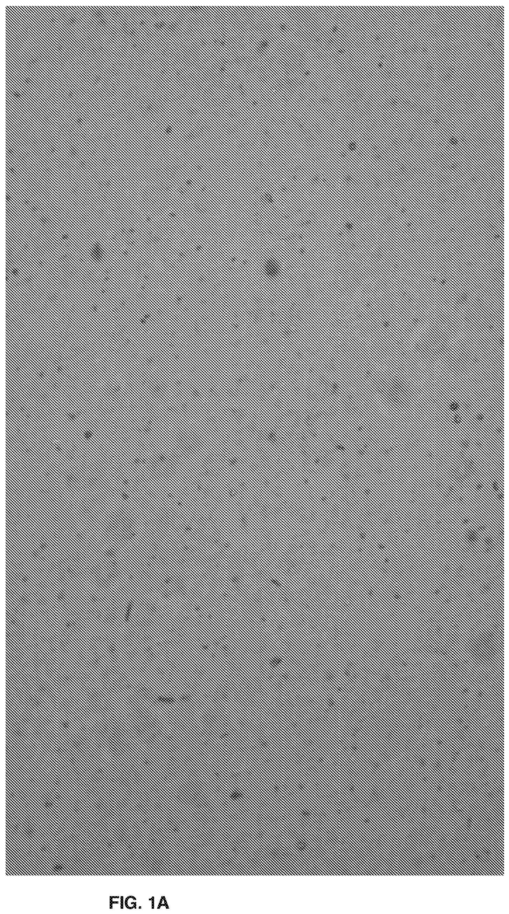

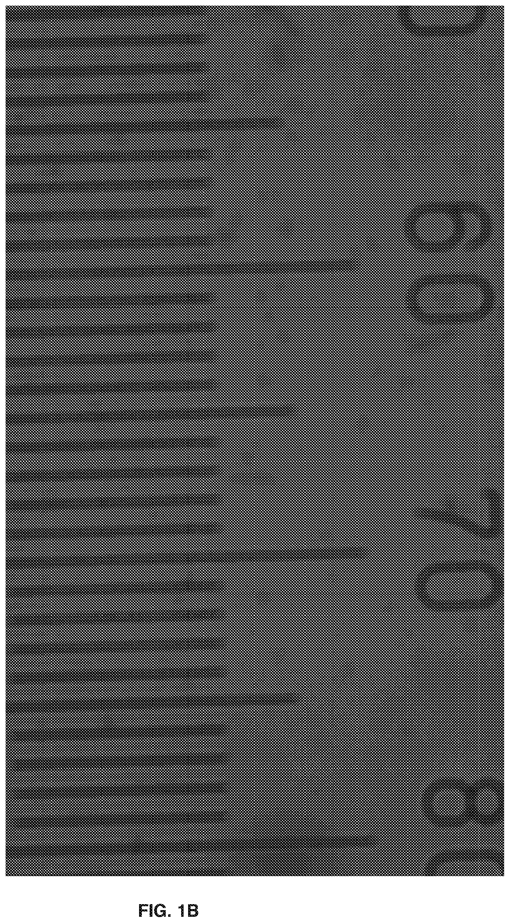

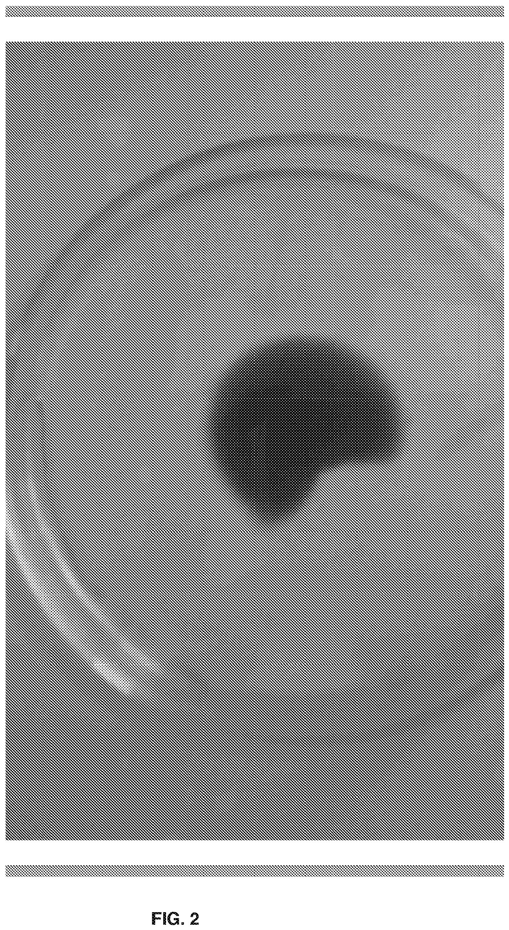

Details are provided below in Example 1. Briefly, Figure 1A shows a microscopic view, in dilution, of supernatant from 5 minutes' centrifugation at 3000g of effluent from a homogeneous continuous biogas digestion of steam preteated wheat straw pellets with hydraulic retention time (HRT) 40 days in which the average DM content at steady state was 13.8% w/w. These centrifuge conditions correspond to the effect achieved by a typical commercial decanter. The micron bar corresponding to the image in Figure 1A is shown in Figure 1B. Each of the divisions shown is 10 µm. As shown, microscopic, dark insoluble particles are obtained, most of which are < 3 µm in diameter. A sample of the simulated decanter supernatant is shown in Figure 2.

The formation of lignin microdroplets on lignocellulosic surfaces during hydrothermal pretreatment was previously well known and appears to be a universal characteristic of lignocellulosic biomass. See Selig (2007), Donohoe (2008), Xiao (2011), Hansen (2013), Pu (2013), Li (2014a), Ji (2016). However these microdroplets were always previously observed to be recoverable only in the solid fraction after centrifugation. The most relevant prior art teaching on this subject is Hansen (2013) which identified these microparticles in solid fraction remaining after centrifugation of INBICON Tm stillage (wheat straw cellullsic ethanol residual) obtained from the Kalundborg demonstration plant. The stillage sample used was from a batch subjected to comparatively extreme hydrolysis (95% theoretical glucose conversion, whereas 80% conversion was the level typically achieved at the Kalundborg plant). Hansen (2013) reports that, at 95% conversion, non-ash content of solid fraction from INBICON Tm stillage comprised 5.1% carbohydrate and 87.6% lignin.

The physical appearance of digestate from homogeneous biogas digestion of pretreated wheat straw pellets (at steady-state DM 13.8%) is strikingly similar to INBICON Tm enzymatic hydrolysate. Yet the same centrifugation conditions which recover lignin in the solid fraction from 95% converted INBICON Tm stillage (10 minutes at 1720 g) recover lignin in the liquid fraction from 78% converted biogas digestate. The most likely ultimate explanation for the observed difference is that the pretreatment applied for biogas digestion was fundamentally different from INBICON Tm pretreatment as applied in 2013.

INBICON Tm pretreatment was applied to raw wheat straw while the biogas pretreatment reported here was applied to straw which had been previously compressed by pelleting. As explained in detail in WO2018/085487, which is hereby expressly incorporated by reference in entirety, compressed straw (pellets or briquettes) has altered hydration properties and behaves differently from raw straw in pressurised steam. Steam condenses on the outer surface of raw straw, then forms a kind of external "soup." In contrast, compressed straw directly absorbs steam condensate. As a consequence it is commercially practicable to achieve homogeneous "cooking" of compressed straw without agitation whereas this is difficult to achieve with raw straw. Unagitated pretreatment of compressed straw results in dramatically lower degradation of C5 sugars at equivalent severity compared with INBICON Tm agitated pretreatment of raw straw - under the conditions used for the biogas digestion in example 1, C5 degradation would be less than 1/3 of that with equivalent severity INBICON Tm pretreatment used for the Hansen (2013) lignin sample. This dramatically lowered C5 loss is necessarily associated with a dramatically lowered incidence of "pseudo-lignin" - lignin-like chemical compounds produced by acid-catalyzed condensation reactions involving byproducts of C5 sugar degradation during pretreatment.

One significant factor in the greater susceptibility of INBICON Tm lignin to centrifugal solid/liquid separation appears to be agitation during pretreatment. Lignin has higher density than water (between 1.2 and 1.3) and is inherently hydrophobic, i.e. inclined to aggregate in aqueous suspension. The only reason why lignin particles would *not* precipitate in centrifugation is that they are held in suspension by a significant anti-sedimentation force. In the case of biogas microlignin, this anti-sedimentation force is the negative surface charge carried by lignin at pH > 2.0 and the extremely small particle size (< 3 µm) of the re-condensed lignin droplets. Electrostatic repulsion prevents the microparticles from aggregating while favorable electrostatic interaction with the aqueous milieu resists the slight sedimentation force acting on the tiny particles. In contrast, re-condensed lignin droplets in INBICON Tm lignin appear to be somewhat larger in size. The typical droplets shown in Hansen (2013) Figure 2 (B1) and (B2) are about 8 µm in diameter. Assuming spherical form, a 3 µm microlignin particle has a volume of about 14 µm3 and a surface area of 28 µm2. In contrast, an 8 µm spherical microlignin particle would have a volume of 268 µm3 and a surface area of 201 µm2. The surface area/volume ratio of the smaller particle is 2.7 times greater than that of the larger particle. The anti-sedimentation force acting on the smaller particle is thus enhanced, first, because it is 19x smaller and, second, because the lignin negative surface charge is much more effectively exposed to the aqueous environment. It is reasonable to propose that, when the feedstock is agitated during pretreatment, small globules of molten lignin combine to form larger particles. This possibility is suggested by the microscope images shown by Hansen - the images in Figure 2 (A2) and (B1) show several examples of what appear to be clusters and irregular shapes formed from aggregates of smaller spherical particles. The image in Figure 2 (B1) shows at least one example of what appears to be lignin accumulated on and intimately associated with a silica cell phytolith. It is difficult to imagine how this could possibly occur in unagitated pretreatment. However, even agitated pretreatments may permit some recovery of suspended microlignin. Approximately 1/3 of the quantities of suspended microlignin that can be recovered from digestion of wheat straw pellets cooked without agitation can be obtained with steamexploded wood chips.

Hansen (2013) is the only known report of re-condensed lignin droplets in actual biorefinery residual from feedstock processed by agitated hydrothermal pretreatment. Selig (2007), Donohoe (2008) and Ji (2016) used unagitated experimental systems. In unagitated hot water pretreatment of corn straw (without added acid), Selig reports a range of re-condensed lignin droplet sizes between 0.5 to 3 µm. Donohoe studied only dilute acid pretreatment both in still and flow-through hot water systems. While Donohoe's flow-through system did not provide agitation *per se,* in that the biomass itself was not agitated, it did involve movement of the aqeuous milieu and was notably associated with larger lignin droplet sizes. Ji studied dilute acid pretreatment in a still hot water system and reports lignin droplet sizes in the range 0.05 to 0.2 µm.

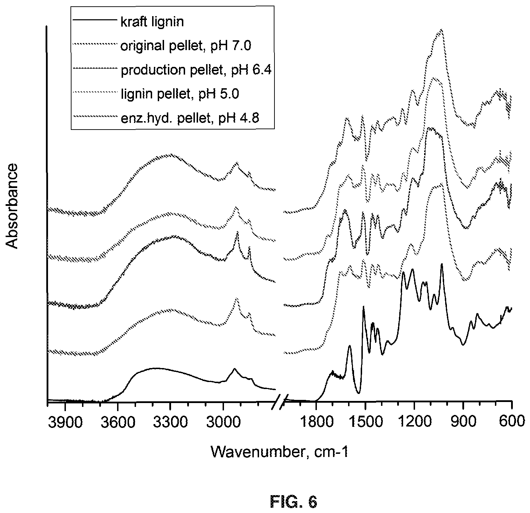

Another factor which might contribute to the greater susceptibility of INBICON Tm lignin to centrifugal solid/liquid separation is increased pseudo-lignin content. It is clear that the INBICON Tm lignin described by Hansen (2013) included a significant contribution from pseudo-lignin, which appears as lignin content in the traditional Klason lignin measurement. This is the expectation based on INBICON's own publications which document that the pretreatment applied in the Kalundborg plant at the time of Hansen (2013) resulted in degradation of as much as 50% of the inherent C5 content of the feedstock into other products. See WO2014/019589 and WO2015/014364. Degradation of monomer xylose during INBICON Tm pretreatment not only led to formation of the specific enzyme inhibitors identified by INBICON, see Rasmussen (2017)(which would be expected also to impair biogas digestion), but also to pseudo-lignin polymerisation according to the generic scheme described by Shinde (2018). The presence of significant impurity in the nominally 87.6% pure INBICON Tm lignin reported by Hansen (2013) is documented by the comparatively poorly resolved FTIR spectrum presented in their Figure 1. At this purity, the distinct lignin peaks should be more clearly resolved. It should be noted that the FTIR spectrum of pseudo-lignin typically has considerable overlap with that of pure lignin. See e.g. Ma (2015). Compare in contrast the FTIR spectra reported here in Figure 6 for purified microlignin from biogas digestion of hydrothermally pretreated wheat straw pellets at approximately 78% conversion (with both wax and dissolved solids included in the solid fraction from 20.000 g/2 hour centrifugation of 3000 g/5 minute supernatant). Lignin comprised only 74% of the non-ash content of this material, yet the FTIR spectrum is more clearly resolved than that presented by Hansen (2013).

Pseudo-lignin microparticles having similar appearance to lignin-rich microparticles are also deposited on fibers and other surfaces during pretreatment. This phenomenon has been studied in detail primarily in dilute acid pretreatment, which is substantially different from INBICON Tm agitated autohydrolysis. But notwithstanding the difference in pretreatment regimes, there is a striking similarity between clusters observed in the Hansen (2013) images and images of pseudo-lignin microparticles formed in the laboratory from xylan and deposited on pure cellulose in dilute acid pretreatment. Compare Kumar (2013) Figure 6 (c-ii), showing "grape-like" clusters of small pseudo-lignin spherical particles < 0.3 µm comprising 8.1 % of total DM with Hansen (2013) Figure 2 (A2), showing similar but slightly larger clusters. It is reasonable to anticipate that pseudo-lignin droplets formed in dilute acid are significantly smaller than those formed in pure water, as reported with lignin droplets by Selig (2007).

Pseudo-lignin might act as a flocculant of lignin particles and/or might contribute to occlusion of lignin particle surface exposure. In circumstances where pseudo-lignin becomes suspended in liquid fraction, it can be precipitated by comparatively low RCF (relative centrifugal force) centrifugation. Yang (2015) reported that pseudo-lignin microspheres <1 µm diameter from corn straw pretreated at sufficiently high severity become suspended in liquid fraction, but can be recovered as solid fraction by centrifugation 10 minutes at 4930 g at a pH which must have been > 5. These conditions are not sufficient to recover lignin microparticles having diameter < 3 µm. Pseudo-lignin microparticles are expected to have much lower surface charge (if any) and thus, compared with individual lignin microparticles, to experience less stabilising electrostatic interaction with water and less inter-particle electrostatic repulsion. Thus, it is conceivable that high pseudo-lignin content contributed to aggregation/flocculation of INBICON Tm lignin particles which might otherwise have remained suspended in centrifugation at 1720 g. Pseudo-lignin might also accumulate on the surface of lignin particles. Hansen (2013) microscope images show that INBICON Tm lignin particles have a rough, coated surface. This could reflect accumulation of pseudo-lignin on re-condensed lignin droplets, which normally have a smooth surface. Whatever the material may be, this "coating" serves to occlude the exposed lignin surface and thereby diminish the interaction between lignin surface charge and the aqueous milieu that would otherwise contribute to anti-sedimentation force.

It is not yet known whether subsequent biogas digestion would ultimately render INBICON Tm residual microlignin inaccesible to low RCF (< 4000 g) centrifugal solid/liquid separation.

Also surprisingly, a substantial component (> 13 wt. %) of the non-ash content of these lignin rich micro-particles is ethanol-extractable, corresponding primarily to wax content with some ethanol-soluble lignin. The fate of wheat straw wax during INBICON Tm pretreatment is not known. However, since wax has a considerably lower melting point than lignin and is located on the outer surface of raw straw, it seems unlikely that wax would partition with lignin into microparticles during agitated hydrothermal pretreatment of raw straw. This effect is possible with unagitated pretreatment of pellets, where the different anatomical components of straw are randomly distributed within the pellet volume. However it is also possible to manipulate the circumstances of pretreatment so as to avoid inclusion of wax in lignin microdroplets, for example, by adding hot water to dry pellets inside the pretreatment reactor and briefly agitating at a temperature above the wax melting point (ca 60 oC) but beneath the lignin melting point (>130 oC). In some embodiments, compressed straw feedstock is first subject to a wax extraction process before hydrothermal pretreatment, for example, using any of the processes described in WO2006/082437, WO2015/185685 or WO2018/086672 or other processes known in the art.

The possibility to recover comparatively pure lignin-rich microparticles in aqueous suspension from enzymatic and/or microbial hydrolysis of hydrothermally-pretreated lignocellulosic feedstocks provides technical basis for a variety of fruitful process concepts. Informed by this disclosure, one skilled in the art will readily conceive such process concepts.

Novel and inventive methods of the invention providing lignin and wax recovery effectively transform straw biogas plants into true biorefineries. Methods of the invention can render use of steam pretreated pelletized straw in biogas digestion economically favorable notwithstanding high feedstock cost. Revenue from high value lignin byproduct offsets feedstock and pretreatment cost in a system which can operate with much higher OLR, i.e. at much higher steady state dry matter levels. With pelletized straw pretreated so as to avoid agitation as described in WO2018/085487, lignin is apparently protected from partial degradation to phenolic compounds. Furthermore C5 degradation is dramatically reduced, which must in turn reduce formation of C5 degradation products. These C5 and lignin degradation products are well known to inhibit anaerobic digestion and act to limit OLR using feedstocks pretreated with typical agitated prior art systems. See e.g. Ahmad (2018) and Paul (2018) for review. As a consequence of reduced inhibitor formation, unagitated pretreatment of pellets for biogas digestion can be safely conducted to severity levels as high as log Ro 3.9, directly contravening prior art teaching that pretreatment should not go above log Ro 3.5 to avoid anaerobic digestion inhibitors. See e.g. Wang (2018) (rice straw); Bauer (2014) (hay); Ferreira (2013) (wheat straw). Higher severity pretreatment with lower incidence of digestion inhibitors permits very high OLR because the feedstock is very rapidly liquefied enzymatically. Theuretzbacher (2015) reported that, at log Ro greater than 3.5, 43.9% on average of day 41 methane production was obtained by day 5 in biogas digestion of raw wheat straw pretreated with agitation by steam explosion. Pretreated straw pellets can be introduced to digestion at dry matter level corresponding to the level during pretreatment - typically about 40%. Very high OLR digestion greatly improves productivity of a biogas plant using existing capital and personnel infrastructure.

In some embodiments, the invention provides a method of processing lignocellulosic biomass comprising the steps of:
- hydrothermally pretreating lignocellulosic biomass in such manner as to avoid agitation of the feedstock during pretreatment with water content during pretreatment between 40 and 85% by weight at pH within the range 3.0 - 8.0 and at temperature within the range 130 - 205 oC and with pretreatment conducted so as to achieve severity log Ro between 3.0 and 4.2 where Ro is residence time in minutes * EXP(reaction temperature in oC - 100/14.75);
- using the pretreated feedstock or process residual derived from the pretreated feedstock as biomass input to an anaerobic digestion for production of biogas, an enzymatic saccharification or a fermentation for production of specific soluble products from which mass is removed in such manner as to produce at least one solid fraction and at least one liquid fraction by screening/ filtration or centrifugal separation which liquid fraction has a concentration of suspended lignin- rich microparticles that pass through filter paper with pore size 20 to 25 µm and that have lignin content > 60 wt. % of the non- ash content of at least 3 g/L; and
- processing the at least one liquid fraction so as to concentrate the suspension or recover a purified solid fraction of suspended microparticle mass.

In some embodiments, the lignocellulosic biomass feedstock prior to hydrothermal pretreatment is compressed to an average specific density of at least 500 kg/m3; and/or the hydrothermal pretreatment is conducted in such manner so as to avoid agitation during pretreatment; and/or the concentration of suspended lignin-rich microparticles in the at least one liquid fraction is at least 3 g dry matter (DM)/L or at least 4 g/L or at least 5 g/L or at least 6 g/L or at least 7 g/L or at least 10 g/L or at least 20 g/L or at least 30 g/L or at least 40 g/L; and/or the composition of the suspended lignin-rich microparticles is characterised in having non-ash content of which <10 wt. % is carbohydrate, and > 60% wt. % is lignin and/or in which the ash content is < 6 wt. %; and/or the at least one liquid fraction is processed so as to recover suspended lignin-rich microparticles as aggregates in a solid fraction; and/or lignin-rich microparticle mass recovered as aggregates is further processed to recover wax content in a separate fraction; and/or recovered lignin-rich microparticle mass is subsequently solubilised in sodium, potassium or ammonium hydroxide solution - optionally after extraction of wax content.

As used herein, the following terms have the following meanings:
"Agitation of the feedstock during pretreatment" refers to processes whereby the biomass and/or accumulated liquid is caused to experience mixing, either through action of a transport screw or other transport mechanism, or through introduction of pressurized steam in a manner intended to cause mixing, or by mechanical manipulation in a manner intended to cause mixing, or through explosive release of pretreated material from reactor pressure to atmospheric pressure or any lower pressure. "Explosive release" refers to release of biomass from the pressure reactor in which the biomass experiences a pressure drop of > 4 bar on exiting the reactor. Use of over-pressure to purge biomass from a reactor is not "explosive release" where the biomass does not experience a pressure drop > 4 bar on exiting the reactor. Agitation is "during pretreatment" to the extent that it occurs within the temperature range 130o and 205oC. It will be readily understood that some agitation prior to reaching reaction temperature and/or after de-pressurization can be advantageous. "Agitation during pretreatment" is "avoided" to the extent that incidental agitation is intentionally minimized, for example, where transport means or other sources of agitation useful in loading and/or unloading a reactor are predominantly turned off during residence time within the temperature range 130o and 205oC.

"Biological conversion process" refers to a microbiological process for transforming lignocellulosic biomass into usable products. The term includes but is not limited to enzymatic saccharification, fermentation for production of specific soluble products, and anaerobic digestion for production of biogas.

"Enzymatic hydrolysis" refers to hydrolysis of a pretreated feedstock using exogenous enzyme mixtures.

"For residence times between 1 and 120 minutes within the temperature range between 130o and 205oC" refers to the amount of time the feedstock being pretreated is within the pressure reactor while the temperature within the reactor is within the range 130o and 205oC.

"Hydrothermal pretreatment" refers to the the use of water either as hot liquid, pressurized steam, or both to "cook" biomass at temperatures within the range 130-230oC.

Mass is "removed from a biological conversion process" when it is taken out of the primary stream of biological conversion. For example, in a biogas plant, biomass is removed from the process as digestate, which may then be subject to some additional processing. Or for example, in an ethanol biorefinery, mass can be removed from the process either before or after recovery of fermentation product. Biomass that has been removed from the process as used herein can still be subject to further processing.

"Microbial digestion" refers to hydrolysis and consumption of a pretreated feedstock by microorganisms, which typically secrete enzyme activities that contribute to the process.

"The pH at which the feedstock is pretreated" is the final pH of water content in the feedstock immediately after pretreatment.

"Severity" refers to the measure of hydrothermal pretreatment conditions given by log Ro where Ro=(residence time in minutes)*EXP(reaction temperature in oC - 100/14.75)].

"Suspended microparticles" refers to suspended particles that pass through a WHATMAN Tm grade 4 filter paper (pore size 20 to 25 µm) under circumstances in which the filter paper is not fouled by accumulated solids. "Concentration of suspended lignin-rich microparticles at least X g dry matter (DM)/L" refers to a measurement made as follows: DM content of the at least one liquid fraction in which the measurement is to be made is determined by drying at 105 oC. The liquid fraction is then diluted so that DM content is 10 g/L and 100 ml of the diluted liquid fraction passed by gravity and without vaccum suction through a WHATMAN Tm grade 4 filter paper (pore size 20 to 25 µm), stirring if necessary to avoid filter fouling. Volume of dilute filtrate is noted and DM content determined by drying at 105 oC. Filtrate is subject to centrifugation 3 hours at 30.000 g to precipitate suspended solids. DM content of the centrifuge supernatant is determined by drying at 105 oC. The difference between DM concentration in filtrate and DM concentration in centrifuge supernatant is concentration of suspended microparticles. To the extent that (observed concentration of suspended microparticles in g/L)*(dilution factor applied to liquid fraction) is at least X g/L, the concentration of suspended microparticles in liquid fraction is at least X g DM/L. Composition of the suspended microparticles is determined using washed filter cake obtained from a sample prepared by adjusting pH of the at least one liquid fraction to 2.0 followed by filtration using a 20 µm filter with applied vaccum suction to produce a filter cake which is then resuspended in 4 volumes of water at pH 2.0 then filtered again with applied vaccum suction to produce a second filter cake with washing repeated twice to produce a fourth filter cake. Ash, carbohydrate, and lignin content of the fourth filter cake is determined as described in "Determination of structural carbohydrates and lignin in biomass," Laboratory Analytical Procedure issue date April 2008 US National Renewable Energy Laboratory Technical Report NREL/TP-510-42618 revised August 2012, except that all calculations are made without correction for extractives and except that acid soluble lignin content is determined using 205 nm absorptivity of 110 L/g cm and except that equivalent reagents and laboratory equipment to that specifically named by brand may be used. "Lignin-rich" refers to composition in which > 60% wt. % of the non-ash content is lignin, where ash, carbohydrate, and lignin content is determined as described above. "Suspended microparticle mass" refers to DM content originally present within suspended lignin-rich microparticles that is subsequently recovered in any form.

"Whole slurry hydrolysate/digestate" refers to a mixture of dissolved and suspended solids and aqueous medium removed from an enzymatic hydrolysis and/or microbial digestion.

"Water content during pretreatment" refers to the weight percentage water content of the feedstock during pretreatment immediately before de-pressurization including initial water content of the feedstock at the time of exposure to mass and heat transfer from added steam or hot water plus any steam condensate absorbed by the biomass and any other water content directly added during pretreatment. Water content is "achieved primarily by adding water to the biomass inside the reactor when it is pressurized" to the extent that the predominant proportion of total water content is added under pressure inside the reactor.

Methods of the invention are particularly advantageously applied to straw feedstocks including wheat, barley, rice, oat, rye, canola, rape, rice and corn straw (including stover). However any suitable lignocellulosic biomass feedstock may be used including but not limited to wood chips, sawdust, and paper or lumber production wastes and energy grasses such as Miscanthus, switchgrass, reed canary grass, or giant reed grass.

Although many different methods and systems for steam pretreatment of straw feedstocks are known in the art, one such system particularly well suited to practice methods of the invention is described in WO2018/085487. This system relies on compressed straw feedstocks (i.e., pellets or briquettes), offering substantially improved recovery of C5 sugars (i.e., xylose) as well as reduced incidence of fermentation inhibitors using a simple, inexpensive sequential batch reactor that is ideal for small "Kalundborg-scale" biorefineries or biogas plants. Atypical reactor as described in WO2018/085487 could achieve 4 tons/DM per hour throughput in a device having only 8 m3 internal volume.

In some embodiments, prior to hydrothermal pretreatment, biomass feedstock has been subject to mechanical compression to an average specific density determined as (mass/volume) of single individual pellets or briquettes of at least 500 kg/m3, or at least 600 kg/m3, or at least 700kg/m3, or between 500-850 kg/m3, or beween 500-999 kg/ m3, or between 750-999 kg/m3, or between 500-1250 kg/m3, or less than 1000 kg/m3, or less than 1100 kg/m3.

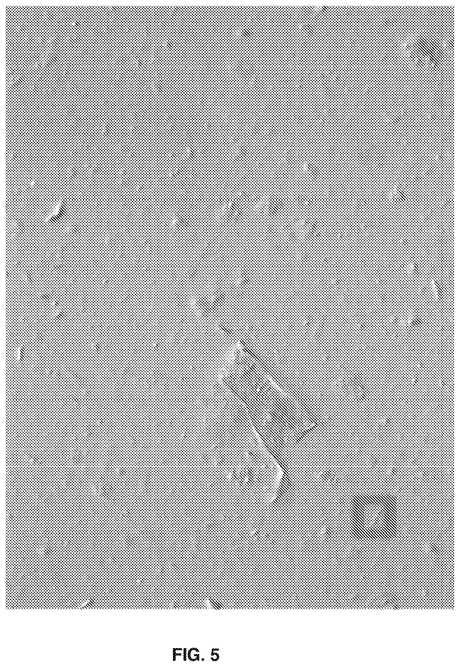

One skilled in the art will, without undue experimentation, readily arrive at appropriate conditions for hydrothermal pretreatment conducted in such manner as to avoid agitation of the feedstock during pretreatment which ensure that lignin-rich microparticles will form. In the case of wheat straw, Kristensen (2008) report formation of the re-condensed lignin particles on fiber surfaces in autohydrolysis hydrothermal pretreatment at high water content >80% wt/wt at 195 o C for 6 minutes to severity log Ro 3.58. In the case of corn straw, Selig (2007)(see Figure 5) report that at temperatures above the native lignin melting point (ca 130o C), lignin droplets are formed and re-condensed on fiber surfaces in autohydrolysis conditions even in extremely dilute pretreatment with water content > 95%. At extremes of pH with added acid (pH < 3.0, so-called "dilute acid" pretreatment), a considerable amount of undesirable pseudo-lignin is produced, which also deposits on fiber surfaces in microparticles similar to lignin droplets and which potentially interferes with lignin recovery as described above concerning INBICON Tm lignin. See also Sannigrahi (2011), Hu (2012) and Pu (2013). At extremes of pH with added base, a significant portion of lignin is solubilised. Thus, essentially any pretreatment conditions sufficient to melt native lignin content but not so harsh as to result in its thermal degradation, can be applied provided that the pH at which the feedstock is pretreated is within the range 3.0 - 8.0. It will be readily understood that longer residence times at a temperature will result in greater production of lignin-rich microparticles. Typically pretreatment residence times between 1 and 120 minutes at a temperature between 130o and 205o C are adequate. In some embodiments, pretreatment is conducted so as to achieve severity log Ro between 3.0 - 4.2. In some embodiments, pretreatment is conducted with compressed feedstock such as pellets or briquettes or with uncompressed feedstocks such as wood chips in such manner that agitation during pretreatment is avoided as described in WO2018/085487. In some embodiments, pretreatment is conducted in such manner that water content is achieved primarily by adding water inside the reactor when it is pressurized, as described in WO2018/085487 except as otherwise specified here. In some embodiments, water content during pretreatment is between 40-85% by weight. The composition of lignin-rich microparticles will vary somewhat with different feedstocks and pretreatment conditions. In some embodiments, methods of the invention are practiced using at least 15.0 kg pretreated lignocellulosic biomass DM.

One skilled in the art will, without undue experimentation, readily arrive at appropriate conditions for a biological conversion process such as enzymatic hydrolysis and/or microbial digestion which ensure that lignin-rich microparticles formed during hydrothermal pretreatment will be primarily suspended in aqueous medium. Typically this is achieved in a steady-state process such as a biogas digestion, a CSTR-SSF process or some similar continuous process or in a batch or fed-batch process provided that > 50% by weight of the fiber content of the pretreated feedstock has been digested or saccharified. In some embodiments, methods of the invention are practiced using process residual derived from pretreated feedstock, such as the lignin fraction described by Hansen (2013) subsequently subject to biogas digestion.

It will be readily understood by one skilled in the art that the pretreated feedstock can be used as a biomass input to a biological conversion process either by itself or along with some additional substrates, such as other lignocellulosic feedstocks (pretreated or not), manure, fish meal, slaughterhouse waste, food waste, organic fraction of municipal solid waste (MSW), or other agricultural wastes. In some embodiments, steam pretreated straw is used in a predominantly homogeneous biogas digestion where a single type of pretreated feedstock provides at least 90% by weight of the total DM fed to the digestion. In some embodiments, a small quantity of some additional biomass such as fish meal, soybeans or sewage sludge may be added as a co-feed to provide additional nitrogen content. In some embodiments, steam pretreated feedstocks are used in a mixed digestion in which some combination of different straw feedstocks collectively provide at least 90% by weight of the total DM fed to the digestion. In some embodiments, very high OLR of steam pretreated straw can be maintained at steady-state, as high as 10.7 kg DM/ m3/day, or 9.45 kg DM/m3/day or 7.40 kg DM/m3 day, or between 4-12 kg DM/m3/day, or > 8 kg DM/m3/day, or > 7 kg DM/m3/day. Because of rapid initial conversion of pretreated straw, viscosity of the digestion is kept at stirrable levels up to 17% wt/wt DM. In some embodiments, steady-state DM even higher than 17% can be achieved, such as is routinely reported with continuous CSTR-SSF of pretreated bagasse. See e.g. Gomes (2018) and Unrean (2018). In some embodiments, steam pretreated wheat straw is used to supplement a traditional biogas digestion of manure with a supplemental OLR of between 1 and 5 kg DM/m3/day sufficient to bring DM content at steady-state to between 12-15% wt/wt. In some embodiments, a traditional continuously stirred tank reactor (CSTR) normally used in a biogas plant is used as a reactor for continuous, steady state enzymatic hydrolysis and simultaneous saccharification and fermentation (SSF) of steam pretreated feedstock. The tank is fed continuously and desired products harvested continuously. Possible high-value fermentation products in such a system include xylitol citric acid or other metabolic products known in the art to be conducive to fermentation on lignocellulosic hydrolysates.

One skilled in the art will, without undue experimentation, readily arrive at conditions for a biological conversion process whereby mass is removed in such manner as to produce at least one solid fraction and at least one liquid fraction which liquid fraction comprises suspended lignin-rich microparticles. It will be readily understood by one skilled in the art that mass is removed from a biological conversion system in order to maintain steady state with respect of input biomass and/or as waste streams after recovery of primary conversion products. It is highly advantageous to recover lignin-rich microparticles suspended in an aqueous liquid fraction following solid/liquid separation. A suspension of microparticles can be concentrated to much higher DM levels and still remain in a liquid state (because of electrostic repulsion between particles) compared with large isolated lignin particles which form pastes. These liquid suspensions are ideally suited for chemical and thermochemical conversion processes that use surface-acting catalyst particles. In some embodiments, the invention provides a liquid suspension of lignin-rich microparticles prepared by a process comprising the steps of (i) applying a solid/liquid separation in such manner as to produce at least one liquid fraction comprising suspended lignin-rich microparticles from mass removed from a biological conversion of lignocellulosic biomass feedstock or of process residual derived from lignocellulosic biomass feedstock where the feedstock had been steam pretreated at pH within the range 3.0 - 8 0 and at temperature within the range 130 - 205 oC, and (ii) concentrating the dry matter content of suspended lignin-rich microparticles by removing water while retaining the suspension in liquid form. Any convenient means for removing water content known in the art can be applied, such as vacuum-assisted evaporation, membrane processes or other methods. In some embodiment, this liquid suspension comprises at least 5 wt. % lignin-rich microparticles, or at least 6%, or at least 7%, or at least 10%, or between 5% and 15%.

Recovery of lignin microparticles as a liquid suspension provides a more highly purified lignin fraction. High silica ash content was a particularly troublesome contaminant of INBICON Tm lignin. For INBICON Tm lignin, Hansen (2013) report an ash content as a % of non-carbohydrate content of 15.2%. Similar high values for ash content as a % of non-carbohydrate content were reported in other studies of INBICON Tm lignin. See e.g. Trinh (2013) and Le (2017). In contrast, lignin-rich microparticles recovered from homogeneous biogas digestion of straw pellets pretreated by unagitated autohydrolysis to log Ro 3.9 have an intrinsic ash content as a % of non-carbohydrate content of at most 5.4% and typically < 4%.

In some embodiments, mass is removed from a biological conversion process in order to maintain steady-state. Mass can be removed from a biological conversion process in a variety of different ways including any known variant of screening/filtration and/or centrifugal separation so as to produce at least one solid fraction and at least one liquid fraction which liquid fraction comprises suspended lignin rich microparticles. The concentration of suspended lignin-rich microparticles in such liquid fractions will vary depending on OLR and residence time but is typically at least 7 g/ L. In some embodiments, centrifugal solid liquid separation is applied with RCF < 5000 g, or less than 4000 g, or less than 3500 g, or between 2000 and 4000 g. in some embodiments, non-centrifugal solid liquid separation with screening/filtration is applied. For example, in a biogas digestion of compressed straw hydrothermally pretreated so as to avoid agitation, decanter centrifugation of digestate will produce at least one solid fraction and at least one liquid fraction which comprises lignin-rich microparticles. For another example, the lignin-rich microparticles recovered by Hansen (2013) in the solid fraction from centrifugation of residual from the original INBICON Tm biological conversion process at RCF 1720 g could alternatively have been recovered in a liquid fraction by applying non-centrifugal solid/liquid separation prinicples. For example, a first screening to remove larger particles (>150 µm) could be followed by a second screening/filtration to remove smaller particles (> 20 µm) optionally with washing of the screen/filter retentate. This would permit separation of silica cell phytoliths, such as the ones shown in Hansen (2013) Figure C1, which are typically much larger than 20 µm. See e.g. Atik (2012). Removal of extraneous silica ash in turn reduces ash content down to the intrinsic ash content of the microparticles themselves. In some embodiments, large fibers and potentially even small fibers separated from silica structures by some further processing can be returned to the ongoing biological conversion process. This provides the underlying technical principle for a continuous CSTR-SSF process: Mass removed to maintain steady-state can be primarily dissolved solids (including fermentation product), fermentive organism biomass and lignin-rich microparticles with fibers and fiber-associated enzymes returned to the main tank. In some embodiments the at least one liquid fraction has a concentration of suspended lignin-rich microparticles at least 3 g DM/L or at least 4 g/L or at least 5 g/L or at least 6 g/L or at least 7 g/L or at least 10 g/L or at least 20 g/L or at least 30 g/L or at least 40 g/L or between 3 and 80 g/L.

in the case of predominantly homogeneous biogas digestion, where hydrothermally pretreated lignocellulosic biomass feedstock is at least 90% by weight of the total DM fed to the digestion, ligin-rich suspended microparticles in at least one liquid fraction of at least 4 g DM/L can typically be obtained where hydrothermally pretreated lignocellulosic biomass feedstock is fed with an OLR of at least 1.08 kg DM/m3/day to a digestion having HRT at least 20 days, with an OLR of at least 1.02 kg DM/m3/day to a digestion having HRT at least 25 days, or with OLR of at least 0.98 kg DM/m3/day to a digestion having HRT at least 40 days. In the case of mixed biogas digestion, concentrations of at least 4 g DM/L of suspended lignin-rich microparticles in at least one liquid fraction can typically be obtained where the contribution of hydrothermally pretreated lignocellulosic biomass feedstock is at least 30% by weight of the total DM fed to the process in which DM content at steady state is at least 12%, or where the contribution of hydrothermally pretreated lignocellulosic biomass feedstock at least 40% by weight where steady-state DM is at least 10%. In the case of mixed biogas digestion specifically with pretreated straw and manure co-feed, ligin-rich suspended microparticles in a liquid fraction of at least 4 g DM/L can typically be obtained where hydrothermally pretreated lignocellulosic biomass feedstock is fed as supplemental feed with an OLR of at least 1.8 kg DM/m3/day to a digestion having HRT at least 20 days, or with an OLR of at least 1.7 kg DM/m3/day to a digestion having HRT at least 25 day. In some embodiments, lignin-rich microparticle mass is recovered in at least one liquid fraction from manure co-digestion in which steam pretreated straw has been supplemented. Washing manure fibers at pH 2 is expected to force phosphorus content into liquid phase, as reported by Oliviera (2016) and Mehta (2013). Accordingly, using such a process scheme, all NPK nutrients can be recovered from subsequent filtrate by reverse osmosis and dried to produce a valuable fertilizer product, while substantially recovering acid in the process where H2SO4 was used to adjust pH.

The at least one liquid fraction comprising suspended lignin-rich microparticles can be processed so as to valorise the microparticles in a variety of different ways. In some embodiments, the liquid suspension is concentrated by removal of water content while maintaing a liquid state. In some embodiments, the liquid fraction is concentrated by vacuum-assisted evaporation or other methods known in the art and then used in chemical or thermochemical treatments with or without catalysts. In some embodiments, microparticle mass is isolated and recovered as aggregates. In some embodiment, microparticle mass is isolated by inducing flocculation by adjusting pH to between 3 and 4, or between 2 and 3, or less than 3, or between 2 and 4 or less than 2, or between 1 and 3. A solid fraction of flocculated lignin-rich microparticle mass is then recovered by filtration or centrifugation or other methods known in the art, optionally after passive sedimentation. It will be readily understood by one skilled in the art that sedimentation time will be reduced the more the pH is reduced. At pH 2, the microparticles can be recovered without pausing for passive sedimentation by ordinary filtration process. In some embodiments, flocculation may be induced by other means such as electrochemical coagulation, which is applied to remove micro-plastic in wastewater treatment, as described by Perren et al. (2018), or by addition of exogenous flocculant such as commercially available cationic polymers, as described by Liu et al. (2016), or other compounds known in the art to be useful for this purpose. The filter cake or decanter pellet obtained during recovery of flocculated microparticles may optionally be washed to remove dissolved solids. In some embodiments, suspended microparticle mass is isolated as a purified solid fraction having DM content > 5% or > 10%, or > 20% by wt.

in some embodiments the purified solid fraction of suspended microparticle mass may be solubilised without any drying cost simply by adding sodium, potassium, calcium or ammonium hydroxide at room temperature (20 oC) and stirring. In some embodiments, hydroxide is added to a weight percent between 1 and 18%, or between 3 and 8%, or between 4 and 10%. In some embodiments, the hydroxide mixture may be heated to a temperature between 20 and 100 oC, or between 25 and 85o C, and stirred for between 0.1 and 18 hours. This provides a valuable lignin product in the form of soluble lignin in strong base solution which can be used, with or without additional purification steps or modification, as reagent in chemical reactions aimed at converting lignin to higher value chemical products. In some embodiments, lignin-rich microparticle mass dissolved in base solution is directly used as phenol substitute in production of phenol-aldehyde resins useful in production of plywood and other wood and cellulosic products such as exterior siding or counter tops made from recycled paper. As reported by Kalami (2018), straw feedstocks are advantageous relative to wood feedstocks in having a greater percentage of aldehyde-reactive groups, and hydrothermal pretreatment followed by enzymatic hydrolysis preserves aldehyde-reactive groups while Kraft, soda and organosolv lignin recovery depletes them. Microlignin of the invention recovered under the most gentle possible conditions of hydrothermal pretreatment conducted so as to avoid agitation should thus be able to completely replace phenol in phenolic resins, optionally produced using acetaldehyde or glyoxal to avoid harmful formaldehyde. The dry matter of lignin microparticle mass filter cake is expected to be about 25-30%, which is exactly in range for direct use in production of phenolic resins, as described by Kalami (2018), once solubilized in strong base.

In some embodiments, lignin solubilised in hydroxide solution is subject to purification by membrane processes. In some embodiments, hydroxide solubilised lignin solution obtained by methods of the invention is used in the simple oxidation process described by He (2017), using H2O2 as oxidant, or by Kalliola (2015) and WO2015/049424, using 02 as oxidant to produce an oxidized solution which is directly usable as cement plasticizer or dispersant. In some embodiments, a cement plasticizer or dispersant is prepared by applying an electrochemical oxidation pocess such as that described by Yang (2018) to hydroxide solubilized lignin to increase charge density and incidence of carboxylic groups, that is, to achieve the same effect as that obtained in the chemical processes reported by Kalliola (2015) and He (2017). In some embodiments, lignin solution in strong base may be subject to electrochemical depolymerisation to recover high value low molecular weight products, for example as described by Cai (2018) and Liu (2017). For review see Zirbes (2018). In some embodiments, lignin solubilized in hydroxide solution is used in a two step oxidation process comprising a first electrochemical depolymerization step and a second oxidation step using H2O2 or 02. In some embodiments, lignin microparticle mass may be dried or subject to wax extraction prior to solubilization with hydroxide. In some embodiments, lignin-rich microparticle mass may be valorised as hydroxide solution, sold as feedstock for upstream processing to final products or directly processed on-site to final products.

Alternatively, a purified lignin-rich microparticle solid fraction can be used in other lignin valorisation schemes well known in the art. In some embodiments the purified solid fraction may be directly dried and used as a direct blend with adhesives used in the production of composite boards and other woods products or as bio-bitumen, i.e. a natural additive to petroleum bitumen used as a "green" diluent in asphalt production analogous to the use of ethanol blend in petroleum fuels. In some embodiments, a purified lignin-rich microparticle solid fraction may be further processed to recover wax fraction separately. In some emodiments, wax fraction is recovered and lignin optionally concurrently dried by hot pressing, in a process analogous to oil extraction from rapeseed, or by density separation in an extrusion process that produces extruded lignin fibers, where the pressing or extrusion is conducted at a temperature above the lignin glass transition temperature, or, alternatively, a level at least 155o C. Typically the glass transition temperature of native lignin is increased by hydrothermal pretreatment. In some embodiments, wax fraction is recovered, before or after drying microparticle mass drying, by a solvent extraction using ethanol, ethyl-acetate, supercritical carbon dioxide, hexane or other solvents known in the art to be useful for this purpose. There exist so many possible variants of processes that practice methods of the invention that it is impossible even to enumerate them. For example, looking only at methods based on wheat straw conversion, some non-limiting examples include any feature of any of the following:
(A). Homogeneous biogas digestion of pretreated wheat straw: Wheat straw pellets hydrothermally pretreated to severity log Ro 3.80 in such manner as to avoid agitation during pretreatment as described in WO2018/085487 are fed at the rate 3.4 tons DM/hour along with acid hydrolysed fish meal (for nitrogen supplement) at the rate 49 kg DM/ hour to a 9000 m3 continuously stirred tank reactor (CSTR) in which an ongoing biogas digestion is being conducted at 52 oC with hydraulic retention time 40 days (OLR 9.0 kg/m3/day). Approximately 9.4 m3/hour digestate is removed and subject to decanter centrifugation. The pH of the decanter liquid fraction is adjusted to 2.0 using HCl and flocculated lignin microparticle mass recovered by drum filtration in a washed filter cake having approximately 30% DM wt/wt. Microparticle mass filter cake is directly solubilized by adding NaOH sufficient to make final weight % 5.0 and stirring at ambient temperature. Lignin NaOH solution is further processed by adding formaldehyde or acetaldehyde to molar ratio 2:1 relative to lignin phenolic hydroxyl content then stirred for 2 hours at 90 oC to form a lignin phenolic resin as described by Kalami (2018).
(B). Biogas digestion of biorefinery hydrolysis residual: Residual remaining after product recovery from a biorefinery utilising saccharification and fermentation of hydrothermally pretreated wheat straw, such as, for example, material similar to INBICON Tm whole slurry residual used by Hansen (2013), Trinh (2013) and Le (2017) is subject to biogas digestion at a temperature between 35 and 55o C and HRT between 1 and 50 days. Digestate from the biogas digestion is subject to either centrifugal solid/liquid separation at RCF < 3500 g or screening/filtration with optional washing of screen/filter retentate so as to recover lignin-rich microparticles in a liquid fraction. Wash liquid may be mixed with liquid fraction. The pH of the liquid fraction is adjusted to 2.0 and suspended lignin-rich microparticle mass recovered by drum filtration in a washed filter cake having approximately 30% DM wt/wt. Additional water content such as process liquid from a subsequent process step may be applied to wash the filter cake. Lignin-rich microparticle mass is valorised as described in (A).
(C). Mixed biogas digestion of pretreated wheat straw with manure: Wheat straw pellets hydrothermally pretreated to severity log Ro 3.80 in such manner as to avoid agitation during pretreatment as described in WO2018/085487 are fed at the rate of 1.77 tons DM/hour optionally with acid hydrolysed fish meal (for nitrogen supplement) at between 1 and 25 kg DM/hour as a supplement to a 9000 m3 continuously stirred tank reactor (CSTR) in which an ongoing biogas digestion of manure (dairy cow or swine) is being conducted at a temperature between 35 and 55o C and HRT between 1 and 25 days at an organic loading rate (OLR) of manure alone which would support a steady-state DM level of 7% wt/wt in the absence of added straw. Approximately 15 m3/hour digestate is removed as whole slurry and subject to solid/liquid separation using a series of filtration steps. A first rough screening recovers particles > 150 µm. A second screening recovers finer particles > 20 µm. Additional water content such as process liquid from a subsequent process step may be applied to wash the particles captured during screening. Solids recovered in the rough screening are first washed using a process liquid having pH 2 and can then optionally be subject to pretreatment, for example using NaOH, to facilitate further biogas digestion. The pH of the liquid fraction is adjusted to 2.0 and suspended lignin-rich microparticle mass recovered by drum filtration in a filter cake having approximately 30% DM wt/wt. Additional water content such as process liquid from a subsequent process step may be applied to wash the filter cake. Lignin-rich microparticle mass is valorised as described in (A). Filtrate and wash fractions are combined then subject to reverse osmosis (de-salination) treatment. Nitrogen - phosphorus - potassium (NPK)-rich product is recovered in about 15% of original volume, dried and sold.
(D). Kalundborg-scale CSTR-SSF biorefinery: Wheat straw pellets hydrothermally pretreated to severity log Ro 3.80 in such manner as to avoid agitation during pretreatment as described in WO2018/085487 are fed at the rate of 4 tons DM/hour to a 9000 m3 continuously stirred tank reactor (CSTR) in which an ongoing, continuous saccharification and fermentation is being conducted at 50 oC with an applied enzyme dose of 0.016 g/g fresh DM added using CELLIC CTEC3 (Tm), a commercial cellulase mixture optimised for lignocellulosic biomass hydrolysis. Approximately 35 m3/hour hydrolysate is removed from the reactor and subject to solid/liquid separation using a series of filtration steps. A first rough screening recovers particles > 150 µm. A second screening recovers finer particles > 20 µm. Additional water content such as process liquid from a subsequent process step may be applied to wash the particles captured during screening. Solids recovered in the rough screening are returned to the main tank, including undigested fibers and fiber-associated enzymes. Fine solids are alternatively discarded or optionally subject to centrifugal separation to remove silica bodies and then also returned to the main tank. The liquid fraction is subject to centrifugal separation for recovery of a solid fermentation product comprising primarily fermentive organism biomass. Additional water content such as process liquid from a subsequent process step may be applied to wash the centrifugal solid fraction. The pH of the supernatant is adjusted to 2.0 and recirculated process liquids and suspended lignin-rich microparticle mass recovered by drum filtration in a washed filter cake having approximately 30% DM wt/ wt. Additional water content such as process liquid from a subsequent process step may be applied to wash the filter cake. The filtrate is subject to electrodialysis or other membrane process for recovery of the primary fermentation product. The recovered lignin-rich microparticle mass is valorised as described in (A).

It will be readily understood by one skilled in the art that features of the various embodiments can be combined. For example, any pretreatment conditions and any means for obtaining at least one liquid fraction comprising suspended lignin-rich microparticles and for any means for concentrating such liquid fraction and any means for isolating and further processing suspended lignin-rich microparticle mass appropriate for biogas digestion can also be applied with enzymatic hydrolysis and/or SSF systems and *vice versa.*

### Examples.

### 1. Recovery of purified lignin micro-particles in effluent stream from continuous biogas digestion of steam pretreated wheat straw.

In preparation for pretreatment, a 50 liter container was filled with 34.90 liters water at room temperature into which was placed 16.0 kg straw pellets (having 94% DM content). The pellets swelled rapidly, expanding into the volume of the container in such manner as to form a dense mass of wetted, compressed straw which required forceful "stirring" with a hand-held electric cement mixer. After 60 minutes, the wetted compressed straw mass was removed from the wetting container and placed within a reactor having internal volume 110 L and diameter about 60 cm comprising two cylindrical sections wrapped with foil and fiber glass insulation joined at a flange that could be sealed using 18 large bolts. The wetted pellets were contained by a wire mesh basket specially designed to fit within the reactor. The reactor was sealed and steam applied using an electric steam generator having capacity of 50 kg/h. After a gradual heating to 190o C, the steam pressure was relieved in such manner that the wetted pellets were pretreated to approximately log Ro 3.9

Steam-pretreated pellets were fed into an 80 liter biogas test reactor equipped with a TG/05 gas meter from Ritter, Bochum Germany. The reactor was initially filled to level 67 liters with innoculum from a commercial biogas tank. Pretreated straw was fed initially at the rate 1.38 kg wet/day. This was intended to be an organic loading rate (OLR) of 5.3 kg DM/m3/day. An effluent corresponding to mass of the input minus estimate biogas output was removed each day. A daily supplemental nitrogen source was added as 5 g DM acid hydrolysed fish meal having known biomethane potential in the system used. The digestion was continued for approximately 4 months until effectively no trace of the original innoculum remained.

Freshly drawn effluent was examined with a microscope. A distribution of fibers ranging from large (1 cm) to small (1 mm) was apparent, along with what can be described a background haze of what appeared to be microscopic particles. The effluent was subject to filtration (by gravity, without vacuum suction), yet substantially dark liquid which obviously contained microscopic particles passed right through ordinary filter paper. The effluent was subsequently subject to centrifugation in an EPPENDORF (Tm) table top microfuge for approximately 10 minutes at 3000g. The liquid supernatant from this centrifugation was examined by microscope. The liquid contained a distribution of very small, dark particles. Figure 1A shows a microscope image of diluted supernatant from the 3000g centrifugation. Fig 1B shows the micron bar corresponding to this microscope view in which each of the shown division correponds to 10 µm. As shown, most of these dark particles are less than 3 µm in diameter.

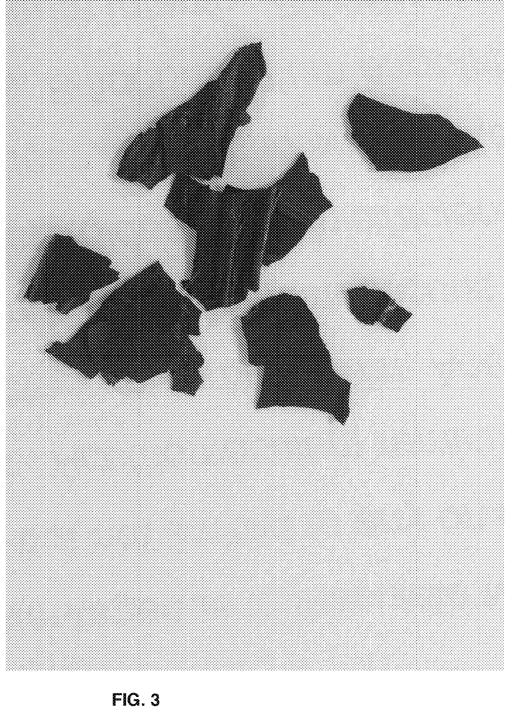

During the course of the biogas digestion, steam pretreated straw was stored in a plastic bag, from which considerable evaporation occurred. As a consequence, due to experimental mishap, volume varied between 80 and 53 liters, OLR varied between 4 and 8 kg DM/m3/day, and TS (total solids, meaning DM) varied between 10.9 and 17.0 %, while maintaining stable biogas production. Further samples were prepared on a preparative stage during the course of the digestion. Mean DM content w/w of fresh daily effluent (as measured by drying 24 hours at 105oC) was determined from three independent samples as 13.8% (14.36, 13.50, 13.55). Fresh effluents were subject to centrifugation at 3000g for 5 minutes using a THERMO SCIENTIFIC (Tm) Megafuge 16 centrifuge equipped with a swinging bucket rotor. The appearance of typical 3000g supernatant is shown in Figure 2. Mean DM content w/w of the centrifuge supernatants (as measured by drying 24 hours at 105oC) was determined from 5 independent daily samples as 6.39% (6.10, 6.04, 6.80, 6.37, 6.63). The appearance of a typical dried supernatant sample is shown in Figure 3. As shown, the sample has the characteristic dark appearance of lignin.

Purity of the lignin content in one centrifuge supernatant sample dried 24 hours at 105 oC was determined in duplicate determination by CHNX elemental analysis. Expressed as weight %, the sample had the following composition: C 52.99, N 3.995, H 6.928, S 0.534, O 32.235. The sample as prepared contained dissolved solids, in addition to lignin microparticles. For a theoretical calculation, the value of CHO elemental weight percentage reported by Tymchyshyn et al. 2010 for organosolv lignin would used as the value for pure lignin, since organosolv lignin is only depolymerised and should therefore have essentially identical chemical composition with our lignin. Based on our estimated values for dissolved solids, the theoretical CHNO weight percentages if 100% of the non-ash content of the undissolved solids was lignin would be C 59.537, N 6.424, H 6.689, S 0.500, O 26.85.

| | C | N | H | O | S |
|---|---|---|---|---|---|
| Theoretical | 59.537 | 6.424 | 6.689 | 26.850 | 0.500 |
| Observed | 52.990 | 3.995 | 6.928 | 32.224 | 0.534 |

### 2. Recovery of purified lignin microparticles from enzymatic hydrolysate of steam pretreated wheat straw.

To a sample of steam pretreated straw pellets prepared as described in example 11 from WO2018/085487, in which water content was added to dry pellets inside the reactor when it was pressurized, tap water was added to bring DM content to 17%. The slurry pH was adjusted to approximately 7.0 using 1 M NH4OH. A quantity of CELLIC CTEC3 (TM) from NOVOZYMES (Tm) sufficient to provide an enzyme dose of 0.3 ml/g straw DM was added to make a hydrolysis mixture in a 500 ml plastic bottle. The bottle was placed horizontally in a bed of straw pellets and shaken horizontally at 150 rpm, 37o C, then subsequently corrected to 50o C and hydrolysed for approximately three more weeks.

The sample had pH 4.8 at the end of the hydrolysis process. This was centrifgued at 3000 g, 5 minutes. The supernatant from 3000g centrifugation was then centrifuged at 35,000 g for two hours in order to separate lignin particles from dissolved solids. (SAMPLE D) A comparison sample from digestate of the biogas digestion described in example 1 was prepared at the same time, pH adjusted to 6.67 with HCl, then centrifuged at 3000 g, 5 minutes, with the resulting supernatant also centrifuged at 35,000 g for two hours. (SAMPLE E)

DM contents of 35.000 g pellets were determined by mean of duplicate oven measurements as enzymatic hydrolysis sample pH 4.8 - 31.58%, biogas digestate sample pH 6.67- 15.88%. Ash content of 35.000 g pellets were determined by mean of duplicate measurements from heating to 500o C for 6 hours as enzymatic hydrolysis sample 17.22% of DM, biogas digestate sample 16.93% of DM (value from a previous 35.000 g pellet at pH 5.0).

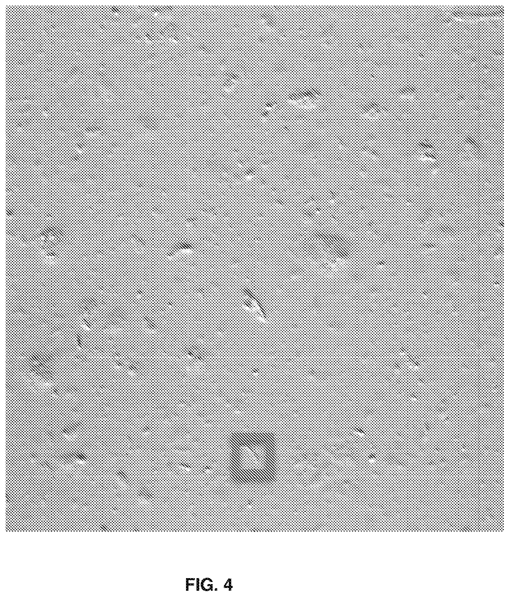

A small aliquot of the biogas digestate pellet was suspended in water and a drop of this water examined under a microscope. Figure 4 shows a microscope view of an aliquot from the 35.000 g/2 hour pellet from centrifugation of 3000g/5 minute supernatant of digestate from the biogas digestion described in example 1. An example of an elongated sausage-shaped bacterium having length about 10 µm is highlighted within a rectangle. As shown, the great bulk of the other particles within the 35.000 g pellet are much smaller, on the order of of 1-3 µm. A comparison aliquot was taken from the 3000 g/5 minute supernatant of the enzymatic hydrolysate. Figure 5 shows a microscope view of an aliquot from the 3.000 g supernatant of enzymatic hydrolysate described in this example. An example of an elongated sausage-shaped bacterium having length about 10 µm is highlighted within a rectangle. An example of a small residual fiber having length about 40 µm is highlighted with an X. As shown, the great bulk of the other particles are much smaller, also on the order of 1-3 µm.

### 3 Recovery of purified lignin micro-particles from biogas digestion of steam pretreated wheat straw.

The biogas digestion described in example 1 was terminated after 7 months. Afterwards, reactor contents were saved for analysis. At the end of the digestion, water was added to restore the level to reactor volume which had dropped due to experimental mishap as explained previously.

4 large buckets holding approximately 80 liters of digestate remaining at the end of the continuous biogas digestion test with pretreated wheat straw pellets described in example 1 were recovered, stored at room temperature for and used for experiments. Samples of digestate were subject to centrifugtion at 3000g for 5 minutes. Decanted 3000 g supernatants (3K supernatants) had pH 7.19. Dry matter (DM) of 3K supernatant by oven (N=2) mean (drying overnight at 105oC) was 6.396 %, by Mettler N=1 6.17%. DM content of the 3K pellet N=2 oven mean was 16.96%.

To briefly investigate effects of pH on precipitation, a sample of 3K supernatant was adjusted to pH 5.0 w HCl and compared in a second 3K g spin with pH unadjusted. A very slight pellet was recovered in the second spin, but this was not different between the two samples.

The same comparison was made between unadjusted 3K supernatant sample having pH 7.19 and a sample with pH adjusted to 2.5. At pH 2.5, two distinct phases were apparent after the second 3K spin with a small yellow supernatant and a large, diffuse dark "pellet." The DM content of this pH 2.5 3K re-spin supernatant (N=2) oven mean was 3.59%, by Mettler N=1 2.25% The DM content of this pH 2.5 3K re-spin pellet N=2 oven mean was 7.40%.

3K supernatant pH 7.19 was subject to centrifugation under a variety of conditions. A single sample was centrifuged at 20.000g for 5 minutes. A small pellet was formed. The material was then centrifuged 20.000 g 1 hour. The resulting pellet was by now much larger but the supernatant remained dark. The material was then centrifuged an additional 49 minutes at 27.000 g. The pellet was slightly larger, the supernatant slightly lighter.

A second sample was created of 3K supernatant with pH adjusted down to 5.0 Both the pH 7.19 sample already spun for approximately two hours and the new pH 5.0 sample was centrifuged at 35.000 g 1 hour. The supernatant was much clearer. The supernatant DM by Mettler at this stage was about the same pH 7.19 1.82%, pH 5.0 2.25%.

Both pH 7.2 and pH 5.0 samples were spun at 35.000 g an additional 1 hour. The final pH 7.19 sample was spun 65 minutes at 20.000 g, 49 minutes at 27.000 g, and 2 hours at 35.000 g. (SAMPLE A) The final pH 5.0 sample was spun 2 hours at 35.000 g. (SAMPLE B). The DM content of pellets was determined by oven (N=2) mean as SAMPLE A 24.56% and SAMPLE B 20.00%. Ash content determined as described in example 2 was mean of duplicates SAMPLE A 16.93% of DM. SAMPLE B could not be determined due to experimental error. Ash content of a pellet produced from pH 6.4 3000g supernatant centrifuged 2 hours at 35.000 g was by oven (N=2) mean 17.77%.

A third sample was created with pH adjusted down to 2.0 and centrifuged 5 minutes at 20.000 g. The supernatant was noticeably lighter compared with SAMPLES A and B and distinctly yellow in color. The sample was spun again at 42.000 g 5 minutes. The supernatant and pellet appeared the same as after 20.000 g 5 minutes. See foto 6. The final pH 2.0 sample was spun 5 minutes at 20.000 g and 5 minutes at 42.000 g. (SAMPLE C) The final pH 2.0 pellet was examined for DM content by Mettler N=1 19.95%.

### 4. Washing out and recovering lignin micro-particles from included aqueous volume of 3K g pellet.

65 g wet of original 3K pellet (@0.1696 DM) = 11.02 g DM was stirred into 499.1 g water. The pellet was easily substantially resuspended by stirring.

Two samples were tested having 248.4 and 247.2 g respectively of the suspension with a DM content 1.95%. Initial total DM for the samples was 4.84 and 4.82 g. These were then spun a second time at 3Kg, producing pellets having 36.0 and 43.0 g respectively wet weight. The pellets had DM by oven (N=2) mean 11.01 and 11.32 % respectively. Thus the estimated pellet DM recovery was 3.96 and 4.87 g respectively.

The supernatants had DM content by oven 0.54 and 0.43 % respectively. Total recovery of dry matter in the supernatant was 1.15 and 0.88 g respectively. Notwithstanding an erroneous mass balance, the estimated recovery on wash as a % of initial pellet DM is 23.76 and 18.25% respectively. N=2, mean 21.0% +/1 2.76 SE. Without adjusting for dissolved solids trapped in the original pellet, this result indicates that on the order of 75-80% of suspended microparticle mass from whole slurry digestate was obtained in liquid fraction after simulated decanter centrifugation.

### 5. Solubility of 42.000 g pellet from pH 2.0 mixture in KOH,

A 100 ml bottle with an airtight sealing cap with magnetic stirrer was initially weighed. To this was added 9.24 g of SAMPLE C described in example 3 having DM content 19.95%, total DM 1.84 g. To this was added 11.91 g water and 1.86 g KOH pellets having DM 99.03% such that the system comprised a total of 3.68 g DM. The bottle was sealed and set on a stirring hotplate and stirred vigorously at 85o C for 13 hours.

All except 0.32 g of the KOH solution (98% of the total) was decanted into a weighed centrifuge tube, with 2% transfer loss. The solution was centrifuged 3 hours at 35.000 g then the supernatant was decanted and DM determined N=1 by Mettler to be 13.88%. Material remaining in the centrifuge tube weighed 0.79 g and had DM determined N=1 by Mettler to be 33.79% such that the total pellet DM was 0.267 g. Even if none of the 35.000 g pellet DM had been KOH, the solubilization of the original added DM was at least 85%. The KOH-solubilized material was saved for further studies

### 6. Harvest of lignin at pH 6.4.

The contents of 1 bucket containing digestate as described in example 3 was subject to centrifugation at 3000 g for 5 minutes by repetitive steps using approximately 400 ml centrifuge bottles. At each iteration, supernatant was decanted into a separate bucket. A total of 9.92 kg supernatant was collected. However, due to an error, this included some undecanted material. This material was then centrifuged a second time at 3000 g 5 minutes to remove erroneously added undecanted material.

The final supernatant pH was initially 7.19 but adjusted down to 6.4 by addition of HCl with some addition of volume. A noticeable incidence of foaming occurred during pH adjustment such that the volume was expanded by air. The pH adjusted material was again centrifuged at 3000 g 5 minutes to reduce volume. This material was then centrifuged 2 hours at 20.000 g in repetitive steps in approximately 250 ml centrifuge bottles. Supernatants were decanted and appeared dark blonde in color. DM content of the supernatant by N=1 Mettler was 2.17% and as N=2 mean oven value 2.45%. Ash content of the supernatant DM as mean of duplicates with a 50 ml sample of solution was 37.28%.

Pellets were initially reasonably firm. This material was removed by spatula, placed in drying pans and dried overnight at 105 oC. DM content of the pellets determined directly from the first drying pan in the repetitive process was 18.4%. This is not much less than the level of 20% observed for pellets from 2 hour centrifugation at 35.000 g, pH 5.0 (SAMPLE B described in example 3). However it should be noted that in later iterations of centrifugation during the harvest, the pellets became progressively less dense -15.3% DM from pan 2, 12.79% from pan 3, 13.54% from pan 5. The looser pellets were associated with an increased "muddiness" of the supernatants such that the characteristic dark blonde color could no longer be clearly seen. This is thought to be due to the fact that pH adjustment was not homogeneous in that initial reactivity (resulting in foaming and presumably bacterial cell rupture) occurred in the top part of the bucket, while lower in the bucket this effect was less pronounced.

A total of 316 g of DM including purified suspended microparticles and associated dissolved solids trapped in the centrifuge pellet was collected from approximately 10 liters of 3000 g supernatant. This indicates that the initial concentration in simulated decanter supernatant was at least 32 g/L, less dissolved solids trapped in the centrifuge pellets, but not counting microparticles trapped in the simulated decanter pellet.

The observed distribution of lignin, fiber and dissolved solids in the final digestate was estimated as follows: Bulk recovery of lignin and dissolved solids was determined by centrifugation of simulated decanter supernatant (3000 g 5 minutes) 2 hours at 20.000 g. Pellet DM was corrected for estimated dissolved solids content to provide the lignin microparticle value. Bacterial cell mass is not accounted. Based on washing experiments with simulated decanter pellet, 24% of total lignin was estimated to remain within decanter pellet. The washed fiber value is an estimate of decanter pellet DM corrected for dissolved solids and lignin microparticle content so as to balance the observed digestate DM content.

| Source | | g/L DM | g/L non-ash DM |
|---|---|---|---|
| washed fiber | 48,8 | | est. 44,4 (not measured) |
| lignin microparticles | 43,0 | | 38,7 |
| dissolved solids | 21,2 | | 13,1 |
| TOTAL | | 113,0 | |

### 7. Determination of lignin purity.

Oven dried samples from the pH 7.2 and pH 5.0 pellets described in example 3 and from the pH 4.8 enzymatic hydrolysate pellet described in example 2 and from the pH 6.4 "production" pellet described in example 6 were charactrised by FTIR spectroscopy and CHNX elemental analysis. FTIR results are shown in Figure 6. (The legend identifies the curves in ascending order in the overlay where Kraft lignin is the bottom curve first listed and enzymatic hydrolysis pellet is the top curve last listed). As shown, the spectra are similar to that of wood Kraft lignin and consistent with similar spectra from wheat straw-derived soda, kraft and organosolv lignin reported by Robles (2015).

### Elemental analysis results:

| pH | C wt % | H | N | S |
|---|---|---|---|---|
| 7.2 (biogas) | 50.3 | 4.9 | 3.4 | 0.5 |
| 6.4 (biogas) | 49.4 | 5.7 | 3.6 | 0.5 |
| 5.0 (biogas) | 52.3 | 5.2 | 3.8 | 0.4 |
| 4.8 (enzymatic)* | 55.5 | 5.2 | 2.7 | 0.2 |

| | | | | |
|---|---|---|---|---|
| *w/out hydrolysed fish | | | | |

The material recovered by 20.000 g centrifugation at pH 4.8, which included associated dissolved solids, had O:C ratio of 0.50 - considerably better than the value of 0.60 for Sigma-Aldrich soda lignin, as reported by Zhao (2013), table 1.

### 8. Recovery of lignin micro-particles by passive sedimentation in ethanol.

A 3.59 g portion of SAMPLE D (enzymatic hydrolysate)(@0.3158 DM, total 1.13 g DM, 2.46 g water) and an 8.71 g portion of SAMPLE E (biogas digestate)(@0.1588 DM, total 1.38 g DM, 7.33 g water) described in example 2 were resuspended in 85.36 and 79.8 g respectively 98% ethanol at room temperature (water by weight SAMPLE D, 4.8% of solvent, SAMPLE E, 10.4 %).

A similar test was conducted using 3000g/5 minute supernatant of biogas digestate described in example 1. A 3.38 g sample of 3Kg supernatant was added to 36.47 g 98% ethanol at room temperature and thoroughly mixed by vortexing (total DM added 0.22, water by weight 8.0%). A fluffy sedimentary layer was already formed at 4 hours while the upper supernatant layer has the characteristic yellowish color of clarified supernatant from 20.000 g centrifugation of 3Kg supernatant of biogas digestate described in example 6. This fluffy sedimentary layer was subject to particle size analysis by laser diffraction by Particle Analytical ApS, Horsholm, Denmark. Results indicate that lignin-rich suspended microparticles experience significant aggregation into much larger particles during ethanol sedimentation.

### 9. Filtration of 3000 g supernatant at pH 7.1 and pH 2.0.

Digestate was subject to centrifugation at 3000 g 5 minutes as described in example 6 and resulting supernatant alternatively used as-is or subject to pH adjustment to lower pH prior to filtration using a laboratory vaccuum filtration system fitted with a Hounisen rundfiltre #118 - 125 mm, with 20 µm pore size. With pH 7.1 filtration experiments (N=2), "filtrate" was notably black in color and of very small volume, indicating that no effective filtration was achieved. The "filter cake" did achieve higher dry matter, however, only over a period of 24 hours and at a rate not substantially different from that achieved by evaporation. With 3000 g supernatants adjusted to pH 1.9, 2.8, and 1.0 (N=3), filter cake after 6-8 hours was between 24-31% DM, filtrate was notably golden in color and comprised approximately 60% of the volume of the sample applied to filtration. Based on recovery in the filter cake, the concentration of suspended lignin-rich microparticles in the filtered volume was > 40 g/L.

### 10. Determination of lignin purity.

A sample of approximately 10 g of oven-dried pH 2 filter cake having DM 24.7% wt/wt from experiments described in example 9 was subject to carbohydrate, Klason and acid soluble lignin determination in duplicate by Celignis Analytical, Limerick, Ireland. The tested material included 9.5 wt.% of total DM as associated dissolved solids of which 38% was ash. The non-ash content of the dried filter cake DM would therefore have comprised at least (9.5/ non-ash fraction) wt% dissolved solids contaminant. The results indicated that the filter cake DM comprised 10.3% ash and that, of the non-ash content, observed combined Klason and acid soluble lignin was 74.0%, carbohydrate impurity 4.2%, and non-carbohydrate impurity 21.8%. Acid soluble lignin content was 3.74%. Ash content of the acid insoluble material in the Klason lignin determination was 5.5%. Assuming that none of the carbohydrate content was derived from dissolved solids, the non-ash content of the original pH 2 filtercake DM, corrected for dissolved solids, would be: lignin 79.2%, carbohydrate impurity 4.5%, non-carbohydrate impurity 16.3%.

### 11. Harvest of microlignin at pH 2.0. ethanol extractability. wax content and potassium hydroxide solubility of the purified lignin fraction.

The contents of 1 bucket containing digestate, as described in examples 3 and 6, was subject to centrifugation at 3000 g for 5 minutes by repetitive steps using approximately 400 ml centrifuge bottles. At each iteration, supernatant was decanted into a separate bucket. A total of 7.84 kg supernatant was collected. pH of the supernatant was adjusted to < 2.0 by addition of 30% HCl, followed by extensive stirring. The measured adjusted pH initially was 1.0. However, by the next day, during the final iterations of processing, the pH had risen to about 2. A very pronounced foaming and volume expansion occurred during pH adjustment which was likely associated with bacterial cell rupture. The pH adjusted material was centrifuged 1 hour at 20.000 g in repetitive steps in approximately 250 ml centrifuge bottles. Supernatants were decanted and appeared light blonde in color.

Dry matter content of 20.000 g pellets and supernatant was determined in bulk, where the combined recovered pellets from 6 centrifuge bottles were dried in one large pan and the corresponding dried supernatants dried in a separate large pan. The physical properties of the pellets were noteworthy: These had an obviously oily appearance with the color and consistency of chocolate truffle filling, somewhat softer and finer than NUTELLA Tm spread but having a creamy and "spreadable" consistency. The pH 6.4 pellets described in example 6 were similar, but the pH < 2.0 pellets had a more refined quality.

Samples of dried, 20.000 g pellet as decribed in this example 11 were sent to Celignis Analytical, Limerick, Ireland for determination of ethanol-extractable content using a Dionex 200 accelerated solvent extraction (ASE) unit (Dionex Co., Sunnyvale, California) according to established laboratory procotols. A hot water extraction was first applied to remove dissolved solids and any water-extractable material in the purified microlignin centrifuge pellet. Extraction using 95% ethanol was applied to DM remaining after hot water extraction at pressure 1500 pounds per square inch (psi), 100 oC for two days. A total of 16.5% of the DM subject to ethanol extraction was recovered dissolved in ethanol.

A sample of ethanol solution containing soluble extracted material was sent to Teknlogisk Institute, Aarhus, Denmark, for characterisation by gas chromatography - mass spectroscopy (GC-MS), as described by Sun (2003), Dunford (2010) and Sin (2012). Three early eluting peaks which were reported by Sin (2012) in studies with ethanol extract of raw wheat straw (comprising primarily wax) were specifically identified in the GC/MS scan - n-heptacosane, n-nonadecane, and hentriacontane. Most of the later eluting peaks in the GC/MS scan of the microlignin ethanol extract were reported by Teknlogisk Institute as "unidentified." However these peaks occur at a similar position as later eluting peaks reported by Sin (2012). Notably, many of the peaks reported by Sin (2012) were not recognised by automatic database comparisons because of alternative fragmenting patterns but were ultimately identified through use of known standards.

Potassium hydroxide solubility of the pH 2 centrifuge-purified lignin fraction was also assessed. A 750 ml bottle with an airtight sealing cap with magnetic stirrer was initially weighed. To this was added 86.89 g of 20.000 g, 1 hour pellet having DM content 17.43%, total DM 15.15 g. The non-ash content of the added lignin was 13.14 g. To this material was added 105.07 g water and 15.05 g KOH pellets having DM 99.03% such that the system comprised a total of 30.09 g DM. The bottle was sealed, set on a stirring hotplate and stirred vigorously at 85o C for 15 hours.

All except 0.32 g of the KOH solution (99.8% of the total) was decanted into weighed centrifuges tube, with 0.2% transfer loss. The solution was centrifuged 3 hours at 35.000 g then the supernatants were decanted. Pellet weights remaining within the centrifuge tubes were determined. Total 35.000 g pellet wet weight was 8.56 g. Pellet dry matter was determined in duplicate as 25.25%. When the observed pellet non-ash content is corrected for soluble non-ash content trapped within the pellet, the observed insoluble non-ash DM recovered within 35.000 g pellet was 0.46 g, or 3.5%. The solubilization of the original added non-ash DM was thus 96.5%.

### 12. Purity of ethanol-extracted microlignin, wax content and solubility of ethanol-extract in diesel oil.

A sample of dried, microlignin with associated dissolved solids which was centrifuge-harvested at pH 2 (from the material prepared in example 11) was first ground with a mortar and pestle to a fine powder then suspended in a 25X excess of hot water. The mixture was stirred at 80o C for 1 hour then allowed to settle. Excess aqueous volume had a "muddy" appearance and was poured off. The remaining wet "pellet" was dried at 105o C directly in the pestle. Dried, hot water washed material was ground to a fine powder then used for ethanol extraction. To a total of 9.55 g DM microlignin 83.12 g 99.95% ethanol were added in a round bottom flask with a magnetic stirrer. The system was sealed, heated to reflux, and subsequently refluxed for 14 hours. 14.0% of initial DM was recovered dissolved in ethanol in a solution having 2.83% DM (mean of N=2).

A known mass of ethanol extract was added to each of three separate 50 ml centrifuge tubes to which were added a quantity of commercial diesel oil sufficient to make the final blend 10% ethanol. Upon mixing, the ethanol solution immediately blended with diesel oil. The centrifuge tubes were then centrifuged 30 minutes at 12.000 g to precipitate any undissolved solids. Pellets comprising diesel oil were washed in 50 ml of hexane, then centrifuged a second time. Supernatant was decanted and the pellets dried. Dry weights of the hexane-washed pellets provided determination of diesel-insoluble DM in the ethanol extract. The mean from N=3 was 62.2% of ethanol-extract DM was soluble in diesel oil. The components of wheat straw wax idenitifed by Sin (2012) are expected to be soluble in diesel oil. Petroleum wax (paraffin) is typically a significant component (1-2% by weight) in commercial diesel fuels. See do Carmo (2018).

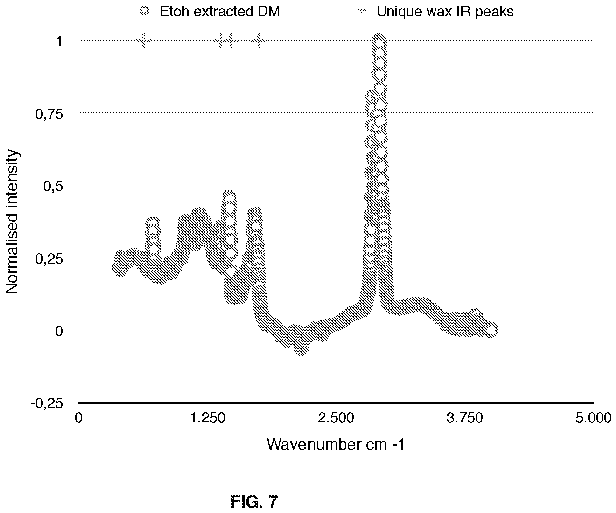

Remaining ethanol extract was dried. The dried sample clearly had characteristics of wax content, along with a notable and unpleasant odor. A normalised FTIR spectrum of the dried ethanol extract is shown in Figure 7. As shown, each of the IR peaks identified by Sin (2012)(see Figure 5.11) as unqiue to wheat straw wax are present - 630, 1377, 1470 and 1741 cm-1. The predominant peaks around 2850 and 2915 corresponding to CH2 and CH3 stretching. These are similar between wax and lignin but appear somewhat sharper in the ethanol extract. As shown by Sin (2012), these peaks are much sharper in higher molecular weight fractions and much broader in lower molecular weight fractions of ethanol extract from raw wheat straw.

Normalised FTIR spectra for the diesel-insoluble component of ethanol-extract of purified microlignin and residual microlignin after ethanol extraction show that the diesel-insoluble component clearly comprises primarily lignin (not shown). This indicates that a considerable quantity of lignin is, itself, dissolved in ethanol during extraction. This is in retrospect not surprising. De-polymerised lignin is well known to be ethanol-soluble and indeed this principle is the underlying technical basis for organosolv extraction of lignin content. See e.g. Ye 2012. A significant portion of lignin from steam pretreated wheat straw has molecular weight on the order of 900. See Heikkenen 2014, Figure 3 (dioxane extracted lignin). This low molecular weight material is likely soluble in ethanol - methanol fractionation of Kraft lignin recovers a similar low molecular weight "methanol soluble" fraction 650-950 MW. See Li 2014, p. 69, col 1, paragraph 1 (IN-MS "methanol soluble").

A sample of dried, ethanol-extracted microlignin residual was subject to carbohydrate, Klason and acid soluble lignin, and elemental analysis determination in duplicate by Celignis Analytical, Limerick, Ireland. Compared with the pH 2 filter cake DM referred to in example 10, lignin content was clearly enriched by ethanol-extraction - observed combined Klason and acid soluble lignin was 84.2% of non-ash content, carbohydrate impurity 4.0%, with remaining non-carbohydrate impurity 11.8%. If all the intrinsic wax content and all the lignin content of the feedstock were contained in the microparticles, the wax fraction should be on the order of 12% of the non-ash content. The ethanol extraction result, the characteristic of extracted DM as about 40% diesel-insoluble, and the lignin purity result is consistent with an extraction of about 8% of DM as wax content, with concurrent extraction of about 6% of DM as ethanol-soluble lignin. The remaining 11.8% impurity constitutes more than can reasonably be attributed to un-extracted wax content. However, some of this remaining impurity seem to be artifactual. Elemental analysis of the ethanol extracted residual showed an O:C ratio of 0.32, which is close to the value of 0.29 reported for pure organosolv lignin from Sigma-Aldrich reported by Tymchyshyn (2010)(see Table 1). Yet the non-ash composition included 4% nitrogen. This is identical with the nitrogen content of 3000 g supernatant directly dried, along with dissolved solids, as described in example 1. This nitrogen content could not correspond to protein, since that would imply a much greater impurity than 11.8% - literally on the order of at least 22%. We think the high nitrogen content can be explained by a peculiar artifact. Free ammonia levels in the digestate were observed between 1.5 and 4.1 g/L during the fish-meal supplemented digestion. This is about 5-6% of the concentration of suspended lignin microparticles. For whatever reasons, much of this ammonia content followed lignin in the centrifuge pellet during centrifuge-purification. Then, during drying at 105o C, as concentrations became elevated, ammonia reacted with lignin carboxyl groups, became stably associated with the lignin and was neither liberated by hot water wash nor ethanol reflux extraction. If this explanation is correct, the observed 4% nitrogen content corresponds to 5% ammonia content and the intrinsic remaining impurity is actually only 6.8%, in line with expectations where the impurity is primarily un-extracted wax content. Applying a correction for 5% ammonia content, the corrected observed purity of non-ash content after ethanol extraction would be 88.6% lignin, 4.2% carbohydrate and 7.2% non-carbohydrate impurity.

### 13. intrinsic ash content and ethyl-acetate, hexane and hot water extraction of microlignin particles.

Afresh sample of microlignin was prepared from 3000 g pellets saved from the experiments described in examples 1, 6 and 11 and stored frozen. To 1.12 kg wet weight 3000 g pellet was added 1.98 kg water. The pellet material with associated microlignin was re-suspended by vigorous stirring and then centrifuged at 3000 g for 5 minutes in 400 ml centrifuge bottles. Supernatants were decanted, adjusted to pH 1.49 and subject to filtration using a laboratory vacuum filtration system fitted with a Hounisen rundfiltre #118 - 125 mm with 20 µm pore size. The filter system was kept covered to avoid evaporation of water content. Because of the large volume and the low vaccum power of the apparatus, filtration was conducted for 20 hours. The filtration was effective to removed about 2/3 of the liquid volume, which had a similar yellow color as with the 20.000 g supernatant shown in Figure 6 and described in example 6. The filter "cake" was diffuse, having DM content 5.96% (N=1). Without accounting for possible contribution from bacteria ruptured by the pH adjustment, dissolved solids constituted an estimated 14% of DM in the filter "cake." Filter "cake" was washed in 50 ml centrifuge tubes by centrifugation 10 minutes at 4000 g, followed by resuspension with about 9X excess of water having pH 1.9 and centrifugation repeated. This wash process was conducted three consecutive times after the initial recovery of microlignin pellet. Assuming that associated dissolved solids were effectively washed by this process, remaining dissolved solids should have been < .02% of remaining DM.

Some of the pH 2, 4000 g (RCF) pellet mass, presumably washed free of dissolved solids, was dried and saved for further studies while some was used to conduct solvent extractions. About 90 g wet pellet was used to determine DM content (N=3) of 5.7% and ash as a % of DM of 5.18%. This demonstrates that the intrinsic ash content of the microparticles is not greater than about 5%. The ash appears distinctly white, lacking the coloration typically observed with potassium ash, which suggests that it is entirely silica. Notably, during drying of the samples, as the material came to temperature 105o C, a yellow colored liquid emerged from the main mass in the drying pan and formed a separate surrounding "puddle." If the 3X washing step had been effective, this material would not be expected to correspond to dissolved solids. However it must be noted that this material appeared very similar to filtrate from the isolation process and also to supernatant from centrifgue purification of microloginin shown in Figure 6. Thus, we consider that this material likely corresponds to dissolved solids or water-soluble bacterial solids released during pH adjustment to pH 2 which became *entrapped in* or *adsorbed to* microparticle aggregates during flocculation yet which were susceptible of extraction in hot water. Elemental analysis of the original washed pellet DM and of the ethyl-acetate extracted material can be determined to identify nitrogen content from artifactual contamination.

Ethyl-acetate extraction of the material was performed as follows: To 2.75 g washed microlignin pellet DM (with 45.4 g associated water content) was added 216.25 g ethyl acetate in 1 liter, sealed bottle. The bottle was placed in a water bath and the mixture stirred for 8 hours at 62o C, slightly above the highest melting point of wheat straw wax as reported by Sin (2012). The mixture was subsequently centrifuged using 50 ml tubes at 4000 g for 10 minutes in a swinging bucket rotor. Two distinct liquid and two distinct solid phases were apparent in the 50 ml tubes after centrifugation. The upper ethyl acetate phase comprised about 85% of the apparent liquid by visual inspection (which corresponds to the proportions of ethyl actate and water in the sample). The small lower aqueous/ethyl acetate phase had an opaque, "muddy" appearance and was separated from the upper ethyl acetate phase by an intervening solid layer. There was additionally a very small solid layer beneath the lower aqueous/ethyl acetate phase. Total DM recovered in dissolved in ethyl acetate was determined by decanting the ethyl acetate phase, drying in bulk at 105o C and extrapolating the result to the total amount of ethyl acetate added to the mixture. Ethyl-acetate extracted DM was in this manner determined to be 0.5634 g, corresponding to 20.5% of the original DM. The dried, ethyl-acetate extracted DM had no associated odor and had appearance and consistency similar to wheat straw wax obtained by ethanol-extraction of raw straw. FTIR spectra of the dried ethyl-acetate extracted DM can be determined.

Samples of oven-dried washed pellet DM and residual from washed pellet DM after ethyl-acetate extraction were subject to carbohydrate, Klason and acid soluble lignin determination in duplicate by Celignis Analytical, Limerick, Ireland. Surprisingly, composition of the residual after more than 20% of DM was extracted into ethyl-acetate was identical with that of the material before ethyl-acetate extraction - 79% of the non-ash content was lignin, 4% carbohydrate and 17% non-carbohydrate impurity. This suggests that the wax content might be *physically associated* with lignin and thus only released under the conditions of this solvent extraction (at temperature considerably beneath the ethanol extractions described in examples 11 and 12) proportionately with the extent to which lignin was also released. The higher net solubilisation of DM in ethyl acetate than in ethanol might simply reflects a higher solubility of recovered lignin in ethyl acetate.

Hexane and, inadvertently, hot water extraction was performed as follows: To 2.75 g washed microlignin pellet DM (with 45.4 g associated water content) was added 162.89 g hexane. The washed pellet material including lignin with associated water content tended to clump and otherwise minimize solvent exposure. The mixture was stirred for 8 hours at 62o C, slightly beneath the boiling point of hexane, and otherwise processed as described for the ethyl-acetate extraction. Total DM recovered dissolved in hexane was determined as described for ethyl acetate as 0.0235 g, corresponding to 0.9% of DM. With the hexane-extracted samples, it was visually apparent after centrifugation that the lower aqueous phase, having no hexane content, had considerably higher dissolved dry matter than the hexane phase. After decanting the upper hexane phase, all of the remaining material was combined and subject to a second centrifugation at 35.000 g for 1 hour. As shown in Figure 11, the recovered aqueous phase was similar in appearance to the 20.000 g supernatants shown in Figure 6 and had considerable content of dissolved solids, determined by drying in bulk (N=2) to be 0.55%. This indicates that the inadvertent hot-water extraction performed under the conditions of this experiment recovered 9.1% of DM as dissolved solids in the aqueous phase. This is likely an artifact of solids having been *entrapped in* or *adsorbed to* microparticle aggregates during flocculation that were not effectively removed during washing. To the extent that such a large percentage as 9% of the DM isolated in this example is artifactual, the intrinsic non-carbohydrate impurity of the microlignin particles is likely less than 17% and closer in line with the amount that could reasonably be attributed to wax content. This artifactual impurity could be expected to have primarily remained within the aqueous phase during the ethyl-acetate extraction. It seems unlikely that this hot water-extractable material could correspond to lipophillic content such as free fatty acids and diglycerides, which have been identified in hot water extracts from raw straw. See Sun (2003).

### 14. Direct solvent extraction of wax content from potassium hydroxide solubilised microlignin.

The KOH solubilised, centrifuge-purified microlignin solution described in example 11 was used to test direct extraction of wax fraction in hexane. Hexane was added to the KOH solution at room temperature so that the final volume ratio of hexane:water was 1:1. After mixing, the solution comprised a single phase such that no hexane phase separated and, accordingly, direct solvent extraction was not possible.

### 15. Separation of wax and lignin content by density at 170o C.

Afresh sample of washed microlignin can be prepared as described in example 13 but with isolation of microparticles and washing by centrifugation at 35.000g without pH adjustment. The washed microparticle DM can be placed in a glass vial and heated to 170o C for one hour. The sample can be examined to determine whether wax and lignin content can be separated by passive density difference above the lignin glass transition temperature estimated to be higher than that for native lignin but not higher than that reported for pretreated poplar wood of 154o C as per Poursorkhabi (2013).

### 16. Determination of theoretical steady-state OLR and DM for biogas digestion of steam pretreated wheat straw.

A steady state methane production of 265 m3/ton TS was observed in the biogas digestion described in example 1. Taking the average of the elemental analysis for wheat straw reported by Perez (2015) and by Niu (2016), the contribution of water to the resulting biogas mass can be estimated as 15%: (The averaged formula weight of wheat straw biomass is C(6)H(9.35)O(4.13)N(0.07)S(0.014). Applying the modified theoretical calculation presented by Achinas 2016, and assuming the resulting biogas to be 50/50 CH4/CO2, weight contribution from water can be estimated as 0.15, the remaining 0.85 being attributed to biomass conversion.) By this estimate production of 265 m3/ton DM implies a conversion of ca 75% of non-ash, non-lignin content of the input straw. Extrapolating this result to a 9000 m3 tank running with 40 day residence time provides a crude estimate of OLR and DM that could theoretically be sustained in homogeneous digestion of straw steam pretreated to at least log Ro 3.0 at steady state, barring metabolic derangement or upper limits of volumetric methane production (VMP): At OLR 7.40 kg DM/m3/day (2.78 ton/hour), steady-state DM would be approximately 13.7% with VMP 1.96 m3/m3/day. A steady-state DM level of 15% would be sustained at OLR 8.08 kg DM/m3/day (3.03 ton/hour) with VMP 2.14 m3/m3/day. A steady-state TS level of 17% would be sustained at OLR 9.16 kg DM/m3/day (3.4 ton/hour) with VMP 2.43 m3/m3/day.

For homogeneous digestion of wheat straw steam pretreated to severity log Ro 3.0 or greater, Theuretzbacher (2015) reported that 95.5% on average of the 41 day methane production was obtained by day 25. Extrapolation of this 95.5% figure provides an estimate for 25 day digestion of 253 nm3/ton DM. Assuming that a homogeneous steam pretreated straw digestion sufficient to maintain steady-state DM of 5% can be superimposed onto a background of primary manure digestion at the test temperature (with use of supplemental hydrolysed fish meal to restore C:N ratio, as needed), these results suggest that a *supplemental* steam pretreated straw OLR of 4.72 kg/m3/day can be sustained in 25 day manure digestion.

### 17. Potassium hydroxide solubility of washed microlignin at room temperature.

Samples of microlignin isolated by centrifugation as reported in examples 1, 2, and 3 and by filtration in example 10 all included a substantial contribution of dissolved solids, including salts (ash) which might affect electrostatic interactions of lignin with aqueous solvent. Results in example 13 also indicated that "washing" by centrifugation may be ineffective for reasons not fully understood. A sample of washed microlignin simulating a washed vacuum drum filter cake was prepared as follows:
A fresh sample of microlignin was prepared from 3000g pellets saved from the experiments in example 1, 6, and 11 and stored frozen. To 5.42 kg wet weight 3000 g pellet was added 10.60 kg water. The pellet was re-suspended by vigorous stirring and then centrifuged at 3000 g for 5 minutes in 400 ml centrifuge bottles. Supernatants were decanted so as to avoid collecting particulate matter not firmly associated with pellets (i.e., leaving some supernatant behind in the centrifuge bottle) and strained through a tea strainer to remove any floating fibers. The pH of the collected supernatant was adjusted to < 2.0 using HCl then centrifuged 1 hour at 20.000 g. Centrifuge pellets were re-suspended in an excess of tap water with pH adjusted to 1.9 and washed by passive sedimentation at room temperature in 3 separate 1 liter beakers. From a volume of 1000 ml, a diffuse sedimentary layer having volume about 400 ml could be readily collected within 1 hour. The diffuse sedimentary layers were re-suspended to 1000 ml in pH 1.9 water and washed by passive sedimentation a total of 3 times. Diffuse sedimentary layers were then collected and concentrated by centrifugation 1 hour at 20.000 g to a pellet having 19.30 % DM (N=2).

### The washed microlignin pellet was solubilized in potassium hydroxide as follows:

A 250 ml bottle with air tight sealing cap with magnetic stirrer was initially weighed. To this was added 115.2 g washed microlignin pellet (22.2 g DM), 72.97 g tap water and 15.0 g KOH (14.93 g DM) to form a 7.3% KOH solution, which is the functional equivalent of a 5.2% NaOH solution. Upon addition of KOH and simply shaking the contents of the bottle, it was visually apparent that the microlignin DM had dissolved as rapidly as the KOH, i.e. within less than 1 minute of shaking at room temperature. The solution was subsequently stirred 8 hours at 70 oC according to a protocol used to prepare a sample for testing using a proprietary process for preparation of mineral wool binder using lignin dissolved in base. Subsequent centrifugation 1 hour at 20.000 g confirmed that > 86% of the microlignin DM was solubilized.

### 18. Catalytic depolymerisation of NaOH solubilized microlignin.

The sample of microlignin dissolved in KOH in example 17 was concentrated by evaporation under a nitrogen stream while stirring at 70 oC and additional washed microlignin pellet was added to bring the final concentration of lignin DM to 25%. An aliquot of 3.28 g of this material was added to a stainless steel pipe (11 ml internal volume) designed to be sealed between two large metal blocks by two threaded screws tightened with nuts and bolts. External temperature of the pipe was measured using a probe wire measuring from its tip that was wrapped around the pipe. The pipe was placed in an oven at 400 oC and temperature rise monitored. When the temperature reached 240o C (after about 6 minutes), the oven door was opened until the pipe temperature returned to 180oC. The oven door was then closed and temperature allowed to rise to 240oC once again. This process was repeated until the elapsed time reached 23 minutes after which the door was opened and a fan blown on the pipe until it cooled sufficiently to be removed from the oven. After the pipe was cooled the weight before and after opening was noted. No mass loss after opening corresponding to gas was detected. The contents of the pipe were washed out with tap water and the pipe and closures were sonicated 1 hour in the wash liquid. The pH of the wash was adjusted to < 2 with HCl then allowed to sediment 1 hour. The wash was then vacuum-filtered using ADVANTEC Tm glass fiber GA-55 filter paper. The filter paper was dried and the total filtered mass measured as 0.367 g. A known quantity of filtrate was dried to determined total recovery of DM in 312 ml filtrate as 2.03 g. In a control experiment, 3.28 g of the sample solution was added to 300 ml of tap water. The pH was adjusted to < 2 with HCl then allowed to sediment 1 hour. The diluted sample was then vacuum-filtered in the same way. A known quantity of filtrate was dried to determined total recovery of DM in 290 ml filtrate as 1.45 g. Visual comparison of the dried filtrate showed a striking difference. With the control, only potassium salts appear to have been present. With the "cooked" sample, however, there was a light olive-green colored material having an oily appearance. Of 0.82 g lignin DM contained in the sample, approximately 55.1% appears to have been rendered water soluble by the treatment (0.58 g difference from control in recovery of DM in filtrate) with 44.7% remaining insoluble (0.367 g filtered DM). This results appears similar but at much higher lignin loading than that reported by Abdelaziz (2018) using Kraft lignin within an identified depolymerisation "sweet spot" between 230 and 240o C.

### 19. Preparation of a lignin-oil -water liquid emulsion fuel.

52 kg of pretreated wheat straw pellet biomass prepared as described in example 1 having 25.8% DM was subject to dilute enzymatic hydrolysis in about 340 liters volume in a stirred fermenter tank using 9 liters of CELLIC CTEC2 Tm cellulase enzyme cocktail. Hydrolysis was conducted at 50o C for 6 days, with pH adjusted daily using NaOH. Considerable lactic acid accumulation was apparent. The hydrolysate was subject to solid/liquid separation using a commercial decanter operated at appoximately 3500 g. The supernatant (approximately 300 liters) was adjusted to pH < 2 then allowed to passively sediment at ambient temperature in Copenhagen, Denmark between May 29 and August 2, 2019. The sediment containing microlignin was collected in about 14 liters volume. Microlignin mass was isolated by vacuum filtration using nylon filters to avoid introduction of filter paper fibers into the lignin. Approximately 200 g of filter cake having DM content 28.1% was dried overnight at 45o C. The dried material was milled and an emulsion comprising 40% lignin, 20% oil and 40% water such as the identified optimal mixture described in WO2016023563A1 was prepared as follows: 7.6 g water and 8.25 g rapseed oil were homo-genized for 10 minutes using an ULTRA TURRAX Tm high speed mixer at maximum. 16.5 g of milled lignin was wetted by adding 8.9 g water to make a thick paste having 65% DM. The lignin mixture was added to the water/oil mixture and homogenized an additional 10 minutes. The resulting emulsion had a consistency which could be described as a creamy paste similar to centrifuge pellets of isolated microligin having much lower DM content on the order of 16%.

### 20. Hexane extraction of dried microlianin mass.

A sample of microlignin mass was isolated from the sediment referred to in example 18 by centrifugation 15 minutes at 4000 g. The pellet was resuspended in tap water and washed twice by repeat centrifugation. The sample (19 g) was dried at 105o C and extracted using hexane as solvent in a Dionex ASE 200 systemsent by CELlGNIS laboratories, Castleroy, Ireland. A total of 3.49 wt. % of the sample DM was extracted into hexane. Where lignin is insoluble in hexane, the extract is considered to be a comparatively pure wax fraction.

### 21. Recovery of lignin microparticles from biogas digestion of steam exploded wood chips.

Rejected fine particles from production of poplar wood chips were steam preteated at 200o C with explosive release to atmospheric pressure then used as feedstock for continuous biogas digestion on 4 liter scale. A sample of digestate was taken and subject to simulated decanter separation by centrifugation in a laboratory centrifuge for 5 minutes at 3000 g. The simulated decanter supernatant having DM content 1.28% was adjusted to pH < 2 using HCl and a pellet recovered by centrifugation. The pellet was dried at 105oC. The dry matter had the characteristic black appearance of lignin. The concentration of lignin microparticles in the simulated decanter supernatant as estimated from centrifugation at pH < 2 was 0.44% or 4.4 g/L - approximately 34% of the total DM. The results indicate that, while the great bulk of lignin was recovered in simulated decanter pellet, some suspended lignin microparticles could neverthess be recovered from this digestate even though the wood chip feedstock had been pretreated by steam explosion. This suggests that normal recovery of suspended lignin microparticles in decanter supernatant should be possible where the chips are pretreated without agitation as described in WO2018/085487.

### 22. Concentration of a lignin microprticle suspension.

Wheat straw pellets were prepared in the field using a METITRON 560 Tm pellet harvester. Approximately 3 kg dry weight of the pellets were added to 4.5 kg of tap water and allowed to swell while being stirred in a large mixer suitable for use with bread dough. The wetted pellets were steam pretreated at 190o C to severity log Ro approximately 3.9 at Lund University Department of Chemical Engineering in a 10 liter steam gun. Pretreated material was removed from the reactor without explosive release using an overpressure of approximately 2 bar. The pretreated straw pellets were then used as feedstock for continuous biogas digestion on 4 liter scale at OLR 5.0 kg/ m3/day, 25 days residence time. A sample of digestate was taken and subject to simulated decanter separation by centrifugation in a laboratory centrifuge for 5 minutes at 3000 g. The simulated decanter supernatant having DM content 2.27% was concentrated by placing a sample in a dessicator under vacuum. Because of high quantities of dissolved carbon dioxide, the sample could only be brought under vaccum very gradually. After 2 business days under vacuum, the DM content was 5.10%. The increased density of the liquid sample was visible to the eye.

### 23. Preparation of phenolic resin from NaOH solubilized microlignin.

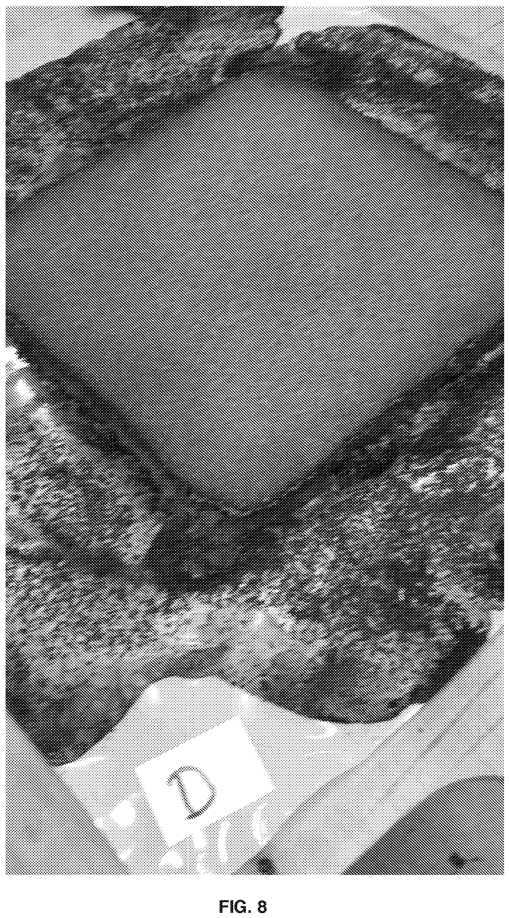

Microlignin from the enzymatic hydrolysis described in example 19 was recovered by washing decanter pellet (in which some microlignin is trapped along with dissolved solids) and then allowing fibers and silicates to sediment passively. The upper layer containing suspended microparticles was removed by siphon and adjusted to pH < 2. Flocculated microlignin mass was isolated by centrifugation and dissolved by adding NaOH to make a solution having 7.2 wt.% NaOH and 9.15 wt. % lignin. A test of production of hot pressed fiber board using this solution as a replacement for phenol in a phenol-formaldehyde resin was made by Teknologisk Institut, Taastrup, Denmark. Based on the approach described by Kalami (2018), lignin was used as a complete replacement for phenol. Binder comprised 15 wt. %. Press temperature was 210 ° C, pressing time 200 sec. A coherent 30x30x10 mm plate having density 600 - 650 kg / m3 was obtained, as shown in Figure 8.

The embodiments and examples described are exemplative only and not intended to limit the scope of the invention as defined by the claims.

### ACKNOWLEDGMENTS

Support and advice is gratefully acknowledged from Jacob Wagner Jensen, Bigadan A/S, Skanderborg; Claus Felby, Novo Nordisk Fond, Hellerup; lb Johannsen, Bio2oil IVS, Aarhus; Joachim Bachmann Nielsen, Kvasir Technologies IVS, Roskilde; Anne Christine Steenkjær Hastrup, Teknologisk Institut, Taastrup; and Ola Wallberg, Lund University.

### PATENT REFERENCES

WO2018/085487
WO2018/086672
WO2015/049424
WO2015/014364
WO2015/019589
WO2015/185685
WO2006/082437

### NON-PATENT REFERENCES

Abdelaziz, O. et al. "Continuous catalytic depolymerisation and conversion of industrial kraft lignin into low-molecular-weight aromatics," Biomass Conversion and Biorefinery (2018) 8:455.
Achinas, S. and Euverink, G. "Theoretical analysis of biogas potential prediction from agricultural waste," Resource-Efficient Technologies 2 (2016) 143-147.
Ahmad, F. et al. "Hydrothermal Processing of Biomass for Anaerobic Digestion - A Review." Renewable and Sustainable Energy Reviews (2018) 98:108-24.
Atik, C. and Ates, S. "Mass balance of silica in straw from the perspective of silica reduction in straw pulp," Bioresources (2012) 7(3):3274.
Bauer, A. et al. "Steam Explosion Pretreatment for Enhancing Biogas Production of Late Harvested Hay." Bioresource Technology C(2014) 166:403-10.
Brethauer, B. and Wyman, C. "Review: Continuous hydrolysis and fermentation for cellulosic ethanol production," Bioresrource Technology (2010) 101 :4862.
Cai, P. et al. "Electrochemical Conversion of Corn Stover Lignin to Biomass-Based Chemicals between Cu/Ni Mo Co Cathode and Pb/PbO 2 Anode in Alkali Solution." Electrochimica Acta (2018) 264:128-39.
do Carmo, R. et al. "Paraffin solubility curves of diesel fuels from thermosynamic model adjusted through experimental DSC thermograms," Fuel (2018) 230:266.
Donohoe, B. et al. "Visualising lignin coalescence and migration through maize cell walls following thermochemical pretreatment," Biotechnology and Bioengineering (2008) 101(5):913.
Dunford, N. et al. "Pressurised solvent extraction of policosanol from wheat straw, germ and bran," Food Chemistry (2010) 119:1246.
Ferreira, L. et al. "Influence of thermal pretreatment on the biochemical methane potential of wheat straw," Bioresource Technology (2013) 143:251.
Gomes, A. et al. "Fed-batch strategies for saccharification of pilot scale mild-acid and alkali pretreated sugar cane bagasse: Effects of solid loading and surfactant addition," Industrial Crops and Products (2018) 119:283.
Hansen, M. et al. "Structural and chemical analysis of process residue from biochemical conversion of wheat straw (Triticum aestivum L.) to ethanol," Biomass and Bioenergy (2013) 56:572.
He, W. et al. "Oxidation of kraft lignin with hydrogen peroxide and its application as a dispersant for kaolin suspensions," ACS Sustainable Chemistry (2017) 5:10597.
Heikkenen, H. et al. "Impact of steam explosion on the wheat straw lignin structure studied by solution state nuclear magnetic resonance and density functional methods," J. Agric. Food Chem. (2014) 62:10437.
Hu, F. et al. "Pseudo-lignin formation and its impact on enzymatic hydrolysis," Bioresource Technology (2012) 117:7.
Ji, Z. et al. "Tissue specific response of Miscanthus × giganteus to dilute acid pretreatment for enhancing cellulose digestibility," Carbohydrate Polymers (2016) 154:247.
Kalami, S. et al. "Comparative Analysis of Different Lignins as Phenol Replacement in Phenolic Adhesive Formulations." Industrial Crops and Products (2018) 125:520-28.
Kalliola, A. et al. "Alkali-O2 oxidized lignin - a bio-based concrete plasticiser," Industrial Crops and Products (2015) 74:150.
Kristensen, J. et al. "Cell-wall structural changes in wheat straw pretreated for bioethanol production," Biotechnology for Biofuels (2008) 1 :5.
Kumar, R. et al. "Carbohydrate derived-pseudo-lignin can retard cellulose biological conversion," Biotechnology and Bioenengineering (2013) 110(3):737.
Le, D. et al. "Elemental analysis of various biomass solid fractions in biorefineries by X-ray fluorescence spectrometry," Biomass and Bioenergy (2017) 97:70.
Li, H. et al. "Investigation of Lignin Deposition on Cellulose During Hydrothermal Pretreatment, Its Effect on Cellulose Hydrolysis, and Underlying Mechanisms," Biotechnology and Bioengineering (2014a) 111(3):485.
Li, H. and McDonald, A. "Fractionation and characterization of industrial lignins," Industrial Crops and Products (2014b) 62:67.
Liu, L. et al. "Thermal transformation of aqueous lignin suspension into nanoparticle dispersion and its unique associative properties," TechConnect Briefs 2016, TechConnect.org, ISBN 978-0-9975-1171-0.
Liu, M. et al. "Fine Chemicals Prepared by Bamboo Lignin Degradation through Electrocatalytic Redox between Cu Cathode and Pb/PbO 2 Anode in Alkali Solution." Chemistry Select (2017) 2(17): 4956-62.
Ma, X. et al. "Toward a further understanding of hydrothermally pretreated holocellulose and isolated pseudo lignin," Cellulose (2015) 22:1687.
Mehta, C. and Batstone, D. "Nutrient solubilization and its availability following anaerobic digestion," Water Science & Technology (2013) 67(4):756.
Niu, W. et al. "Twenty-two compositional characterizations and theoretical energy potentials of extensively diversified China's crop residues," Energy (2016) 100:238.
Oliveira, V. et al. "Valorisation of phosphorus extracted from dairy cattle slurry and municipal solid wastes digestates as a fertilizer," Waste and Biomass Valorization (2016) 7(4):861.
Paul, S. and Dutta, A. "Challenges and opportunities of lignocellulosic biomass for anaerobic digestion, Resources, Conservation and Recycling (2018) 130:164.
Perez, D. et al. "Characterisation of the Most Representative Agricultural and Forestry Biomasses in France for Gasification," Waste Biomass Valor (2015) 6:515-526.
Perren, W. et al. "Removal of microbeads from wastewater using electrocoagulation,"ACS Omega (2018) 3:3357.
Poursorkhabi, V. et al. "Extraction of lignin from a coproduct of the cellulosic ethanol industry and its thermal characterization," BioResources (2013) 8:5083.
Pu, Y. et al. "Assessing the molecular structure basis for biomass recalcitrance during dilute acid and hydrothermal pretreatments," Biotechnology for Biofuels (2013) 6:15.
Rasmussen, H. et al. "New degradation compounds from lignocellulosic biomass pretreatment: routes for formation of potent oligophenolic enzyme inhibitors," Green Chemistry (2017) 19:464.
Robles, J. et al. "isolation and characterization of lignins from wheat straw: Application as binder in lithium batteries," International Journal of Biological Macromolecules 104 (2017) 909-918.
Rude, M. and Schirmer, A. "New microbial fuels: a biotech perspective" Current Opinion in Microbiology (2009) 12:274.
Sannigrahi, P. et al. "Pseudo-lignin and pretreatment chemistry," Energy & Environmental Sciences (2011) 4:1306.
Selig, M. et al. "Deposition of lignin droplets produced during dilute acid pretreatment of maize stems retards enzymatic hydrolysis of cellulose," Biotechnol. Prog. (2007) 23:1333.
Shinde, S. et al. "Recent advances in understanding the pseudo-lignin formation in a lignocellulosic biorefinery," Green Chem (2018) 20:2192.
Sin, E. "The extraction and fractionation of waxes from biomass," Ph.D. dissertation, University of York, Department of Chemistry, June (2012).
Sun, R. and Tomkinson, J. "Comparative study of organic solvent and water-soluble lipophillic extractives from wheat straw I: yield and chemical composition," J. Wood Sci. (2003) 49:47.
Theuretzbacher, F. et al. "Steam explosion pretreatment of wheat straw to improve methane yields: Investigation of the degradation kinetics of structural compounds during anaerobic digestion," Bioresource Technology (2015) 179:299.
Trinh, T. et al. "Fast pyrolysis of lignin using a pyrolysis centrifuge reactor," Energy & Fuels (2013) 27:3802.
Tymchyshyn, M. and Xu, C. "Liquefaction of bio-mass in hot-compressed water for the production of phenolic compounds," Bioresource Technology (2010) 101 :2483.
Unrean, P. "Optimised feeding schemes of simultaneous saccharification and fermentation process for high lactic acid titer from sugarcan bagasse," Industrial Crops & Products (2018) 111:660.
"Wang, D. et al. "Can hydrothermal pretreatment improve anaerobic digestion for biogas from lignocellulosic biomass?" Bioresource Technology (2018) 249:117.
Xiao, L. et al. "Impact of hot compressed water pretreatment on the structural changes of woody biomass for bioethanol production," BioResources (2011) 6(2):1576.
Yang, M. et al. "Formation and characterization of pseudo-lignin microspheres during high pressure water treatment," Bioresources (2015) 10(4):8474.
Yang, X. et al. "Doping effects on the electro-degradation of phenol on doped titanium suboxide anodes," Chinese Journal of Chemical Engineering (2018) 26:830-837.
Ye, Y. et al. "Novel method for production of phenolics by combining lignin extraction with lignin depolymerisation in aqueous ethanol," Ind. Eng. Chem. Res. (2012) 51:103.
Zhao, Y. et al. "Depolymerization of lignin by catalytic oxidation with aqueous polyoxometalates," Applied Catalysis A: General 467 (2013) 504-508.
Zirbes, M. and Waldvogel, S. "Electro-Conversion as Sustainable Method for the Fine Chemical Production from the Biopolymer Lignin." Current Opinion in Green and Sustainable Chemistry (2018) 14:19-25.

## Claims

1. A method of processing lignocellulosic biomass comprising the steps of:
- hydrothermally pretreating lignocellulosic biomass in such manner as to avoid agitation of the feedstock during pretreatment with water content during pretreatment between 40 and 85% by weight at pH within the range 3.0 - 8.0 and at temperature within the range 130 - 205 oC and with pretreatment conducted so as to achieve severity log Ro between 3.0 and 4.2 where Ro is residence time in minutes * EXP(reaction temperature in oC - 100/14.75);
- using the pretreated feedstock or process residual derived from the pretreated feedstock as biomass input to an anaerobic digestion for production of biogas, an enzymatic saccharification or a fermentation for production of specific soluble products from which mass is removed in such manner as to produce at least one solid fraction and at least one liquid fraction by screening/ filtration or centrifugal separation which liquid fraction has a concentration of suspended lignin-rich microparticles that pass through filter paper with pore size 20 to 25 µm and that have lignin content > 60 wt. % of the non- ash content of at least 3 g/L; and
- processing the at least one liquid fraction so as to concentrate the suspension or recover a purified solid fraction of suspended microparticle mass.

2. The method of claim 1 in which the lignocellulosic biomass feedstock is wheat, barley, rice, oat, rye, canola, rape, rice or corn straw.

3. The method of claim 1 in which the lignocellulosic biomass feedstock is sawdust, wood chips or paper or lumber production wastes.

4. The method of claim 1 in which the lignocellulosic biomass feedstock is energy grass such as Miscanthus, switchgrass, reed canary grass, or giant reed grass.

5. The method of claim 1 in which the concentration of suspended lignin-rich microparticles in the at least one liquid fraction is at least 4 g/L.

6. The method of claim 1 in which a concentrated suspension is used in chemical or thermochemical treatments with or without catalysts.

7. The method of claim 1 in which hydrothermal pretreatment is conducted so as to achieve severity log Ro between 3.0 and 4.0 where Ro is residence time in minutes * EXP(reaction temperature in oC - 100/14.75).

8. The method of claim 1 in which a purified solid fraction of suspended microparticle mass is solubilized without any drying cost by adding sodium, potassium, calcium or ammonium hydroxide and stirring at room temperature (20 oC) or heating to a temperature between between 20 and 100o C and stirring for between 0.1 and 18 hours.

9. The method of claim 1 in which the anaerobic digestion process is a biogas digestion of manure with a supplemental organic loading rate (OLR) of between 1 and 5 kg DM/m3/ day steam pretreated lignocellulosic biomass.

10. The method of claim 1 in which the anaerobic digestion process is a biogas digestion of biorefinery hydrolysis residual.

11. The method of claim 8 in which the solubilized microparticle mass is subject to electrochemical depolymerisation.

12. The method of claim 8 in which the solubilized microparticle mass is used as reagent in chemical reactions aimed at converting lignin to higher value chemical products.

13. The method of claim 1 in which the at least one liquid fraction is subject to screening/ filtration or centrifugal separation so as to recover a purified solid fraction of lignin-rich microparticle mass by inducing flocculation and harvesting by filtration or centrifugation optionally after passive sedimentation.

14. The method of claim 8 in which the solubilized microparticle mass is used as a phenol substitute in production of phenol-aldehyde resins.

15. The method of claim 8 in which the solubilized microparticle mass is used in an oxidation process using H202 as oxidant in the simple oxidation process described by He (2017) "Oxidation of kraft lignin with hydrogen peroxide and its application as a dispersant for kaolin suspensions," ACS Sustainable Chemistry 5:10597 or using O2 as oxidant in the process described by Kalliola (2015) "Alkali-O2 oxidized lignin - a bio-based concrete plasticiser," Industrial Crops and Products 74:150" and WO2015/049424 or in a two step oxidation process comprising a first electrochemical depolymerization step and a second oxidation step using H202 or 02.

## Patentansprüche

1. Verfahren zum Verarbeiten von lignocellulosehaltiger Biomasse, aufweisend die folgenden Schritte:
- hydrothermales Vorbehandeln von lignocellulosehaltiger Biomasse in der Weise, dass ein Aufwühlen des Ausgangsmaterials während der Vorbehandlung mit einem Wassergehalt während der Vorbehandlung zwischen 40 und 85 Gew.-% bei einem pH-Wert im Bereich von 3,0 bis 8,0 und bei einer Temperatur im Bereich von 130 bis 205 °C vermieden wird und wobei die Vorbehandlung so durchgeführt wird, dass ein Schweregrad log R₀ zwischen 3,0 und 4,2 erreicht wird, wobei R₀ die Verweilzeit in Minuten * EXP(Reaktionstemperatur in °C - 100/14,75) ist;
- Verwenden des vorbehandelten Ausgangsmaterials oder von Verfahrensrückständen, die aus dem vorbehandelten Ausgangsmaterial stammen, als Biomasseeingang in eine anaerobe Vergärung zur Herstellung von Biogas, eine enzymatische Verzuckerung oder eine Fermentation zur Herstellung spezifischer löslicher Produkte, aus denen Masse in der Weise entfernt wird, dass mindestens eine feste Fraktion und mindestens eine flüssige Fraktion durch Sieben/Filtrieren oder Zentrifugaltrennung erzeugt werden, wobei die flüssige Fraktion eine Konzentration an suspendierten ligninreichen Mikropartikeln hat, die durch Filterpapier mit einer Porengröße von 20 bis 25 µm passieren und einen Ligningehalt von > 60 Gew.-% des Gehalts an Materialien ohne Asche von mindestens 3 g/l haben; und
- Verarbeiten der mindestens einen flüssigen Fraktion, um die Suspension einzuengen oder eine gereinigte feste Fraktion der suspendierten Mikropartikelmasse wiederzugewinnen.

2. Verfahren nach Anspruch 1, wobei das lignocellulosehaltige Biomasse-Ausgangsmaterial Weizen, Gerste, Reis, Hafer, Roggen, Rübsen, Raps, Reis oder Maisstroh ist.

3. Verfahren nach Anspruch 1, wobei das lignocellulosehaltige Biomasse-Ausgangsmaterial Sägemehl, Holzspäne oder Papier- oder Holzproduktionsabfälle ist.

4. Verfahren nach Anspruch 1, wobei das lignocellulosehaltige Biomasse-Ausgangsmaterial Energiegras, wie Miscanthus, Rutenhirse, Rohrglanzgras oder Pfahlrohr, ist.

5. Verfahren nach Anspruch 1, wobei die Konzentration an suspendierten ligninreichen Mikropartikeln in der mindestens einen flüssigen Fraktion mindestens 4 g/l beträgt.

6. Verfahren nach Anspruch 1, wobei eine eingeengte Suspension in chemischen oder thermochemischen Behandlungen mit oder ohne Katalysatoren verwendet wird.

7. Verfahren nach Anspruch 1, wobei die hydrothermale Vorbehandlung so durchgeführt wird, dass der Schweregrad log R₀ zwischen 3,0 und 4,0 liegt, wobei R₀ die Verweilzeit in Minuten * EXP(Reaktionstemperatur in °C - 100/14,75) ist.

8. Verfahren nach Anspruch 1, wobei eine gereinigte feste Fraktion der suspendierten Mikropartikelmasse durch Zugeben von Natrium-, Kalium-, Calcium- oder Ammoniumhydroxid und Rühren bei Raumtemperatur (20 °C) oder Erhitzen auf eine Temperatur zwischen 20 und 100 °C und Rühren für zwischen 0,1 und 18 Stunden solubilisiert wird.

9. Verfahren nach Anspruch 1, wobei der anaerobe Vergärungsprozess eine Biogasvergärung von Gülle mit einer zusätzlichen organischen Raumbelastung (OLR) zwischen 1 und 5 kg TS/m³/Tag mit Dampf vorbehandelter lignocellulosehaltiger Biomasse ist.

10. Verfahren nach Anspruch 1, wobei der anaerobe Vergärungsprozess eine Biogasvergärung von Hydrolyserückständen aus einer Bioraffinerie ist.

11. Verfahren nach Anspruch 8, wobei die solubilisierte Mikropartikelmasse einer elektrochemischen Depolymerisation unterzogen wird.

12. Verfahren nach Anspruch 8, wobei die solubilisierte Mikropartikelmasse als Reagens in chemischen Reaktionen verwendet wird, die darauf abzielen, Lignin in höherwertige chemische Produkte umzuwandeln.

13. Verfahren nach Anspruch 1, wobei die mindestens eine flüssige Fraktion einer Siebung/Filtration oder Zentrifugaltrennung unterzogen wird, um eine gereinigte feste Fraktion an ligninreicher Mikropartikelmasse durch Induzieren von Flockung und Ernte durch Filtration oder Zentrifugation, gegebenenfalls nach passiver Sedimentation, wiederzugewinnen.

14. Verfahren nach Anspruch 8, wobei die solubilisierte Mikropartikelmasse als Phenol-Ersatz bei der Herstellung von Phenol-Aldehyd-Harzen verwendet wird.

15. Verfahren nach Anspruch 8, wobei die solubilisierte Mikropartikelmasse in einem Oxidationsprozess unter Verwendung von H₂O₂ als Oxidationsmittel in dem von He (2017) "Oxidation of kraft lignin with hydrogen peroxide and its application as a dispersant for kaolin suspension", ACS Sustainable Chemistry 5:10597 beschrieben Prozess oder unter Verwendung von O₂ als Oxidationsmittel in dem von Kalliola (2015) "Alkali-O2 oxidated lignin - a bio-based concrete plasticiser", Industrial Crops and Products 74:150 und in der WO2015/049424 beschriebenen Prozess oder in einem zweistufigen Oxidationsprozess, der einen ersten elektrochemischen Depolymerisationsschritt und einen zweiten Oxidationsschritt unter Verwendung von H₂O₂ oder O₂ aufweist, verwendet wird.

## Revendications

1. Procédé de traitement de la biomasse lignocellulosique comprenant les étapes consistant à :
- le prétraitement hydrothermique de la biomasse lignocellulosique, de manière à éviter l'agitation de la matière première pendant le prétraitement avec une teneur en eau pendant le prétraitement comprise entre 40 et 85 % en poids à un pH compris entre 3,0 et 8,0 et à une température comprise entre 130°C et 205°C et avec un prétraitement effectué de manière à atteindre une sévérité log R0 comprise entre 3,0 et 4,2 où R0 est le temps de séjour en minutes * EXP(température de réaction en degrés Celsius - 100/14,75) ;
- l'utilisation de la matière première prétraitée ou le résidu du procédé dérivé de la matière première prétraitée comme entrée de la biomasse pour une digestion anaérobie pour la production de biogaz, une saccharification enzymatique ou une fermentation pour la production de produits solubles spécifiques dont la masse est éliminée de manière à produire au moins une fraction solide et au moins une fraction liquide par criblage/filtration ou séparation centrifuge, dont la fraction liquide a une concentration de microparticules riches en lignine en suspension qui traversent le papier filtre avec une taille de pores de 20 à 25 µm et qui ont une teneur en lignine > 60 % en poids de la teneur en matières non cendreuses d'au moins 3 g/L ; et
- le traitement au moins d'une fraction liquide, de manière à concentrer la suspension ou à récupérer une fraction solide purifiée de la masse de microparticules en suspension.

2. Procédé selon la revendication 1, dans lequel la matière première de la biomasse lignocellulosique est du blé, de l'orge, du riz, de l'avoine, du seigle, du canola, du colza, du riz ou de la paille de maïs.

3. Procédé selon la revendication 1, dans lequel la matière première de la biomasse lignocellulosique est de la sciure de bois, des copeaux de bois ou des déchets de production de papier ou de bois d'œuvre.

4. Procédé selon la revendication 1, dans lequel la matière première de la biomasse lignocellulosique est des plantes herbacées à but énergétique, telle que le Miscanthus, le millet vivace, l'alpiste faux-roseau ou la canne de Provence.

5. Procédé selon la revendication 1, dans lequel la concentration de microparticules riches en lignine en suspension dans au moins une fraction liquide est d'au moins 4 g/L.

6. Procédé selon la revendication 1, dans lequel une suspension concentrée est utilisée dans des traitements chimiques ou thermochimiques avec ou sans catalyseurs.

7. Procédé selon la revendication 1, dans lequel le prétraitement hydrothermique est effectué de manière à obtenir un logarithme de sévérité R0 compris entre 3,0 et 4,0, où R0 est le temps de séjour en minutes * EXP(température de réaction en degrés Celsius - 100/14,75).

8. Procédé selon la revendication 1, dans lequel une fraction solide purifiée de la masse de microparticules en suspension est solubilisée par l'addition d'hydroxyde de sodium, de potassium, de calcium ou d'ammonium et l'agitation à température ambiante (20 C) ou le chauffage à une température comprise entre 20 C et 100°C et l'agitation pendant une durée comprise entre 0,1 et 18 heures.

9. Procédé selon la revendication 1, dans lequel le processus de digestion anaérobie est une digestion de fumier qui produit du biogaz avec un taux de charge organique supplémentaire (OLR) compris entre 1 et 5 kg DM/m3/jour de biomasse lignocellulosique prétraitée à la vapeur.

10. Procédé selon la revendication 1, dans lequel le processus de digestion anaérobie est une digestion d'un résidu d'hydrolyse de bioraffinerie qui produit du biogaz.

11. Procédé selon la revendication 8, dans lequel la masse de microparticules solubilisée est soumise à une dépolymérisation électrochimique.

12. Procédé selon la revendication 8, dans lequel la masse de microparticules solubilisée est utilisée comme réactif dans des réactions chimiques visant à convertir la lignine en produits chimiques de valeur supérieure.

13. Procédé selon la revendication 1, dans lequel au moins une fraction liquide est soumise à un criblage/filtration ou à une séparation centrifuge, de manière à récupérer une fraction solide purifiée de la masse de microparticules riche en lignine en induisant une floculation et une récolte par filtration ou centrifugation éventuellement après une sédimentation passive.

14. Procédé selon la revendication 8, dans lequel la masse de microparticules solubilisée est utilisée comme substitut phénolique dans la production de résines phénolaldéhydiques.

15. Procédé selon la revendication 8, dans lequel la masse de microparticules solubilisée est utilisée dans un processus d'oxydation utilisant H₂O₂ comme oxydant dans le processus d'oxydation simple décrit par He (2017) « Oxidation of kraft lignin with hydrogen peroxide and its application as a dispersant for kaolin suspensions », ACS Sustainable Chemistry 5:10597 ou utilisant O₂ comme oxydant dans le processus décrit par Kalliola (2015) « Alkali-02 oxidized lignin - a bio-based concrete plasticiser», Industrial Crops and Products 74:150 et WO2015/049424 ou dans un processus d'oxydation en deux étapes comprenant une première étape de dépolymérisation électrochimique et une seconde étape d'oxydation utilisant de l'H₂O₂ ou de l'O₂.
